(19) Europäisches Patentamt
European Patent Office
Office européen des brevets

(11) **EP 2 347 410 B1**

(12) **EUROPEAN PATENT SPECIFICATION**

(45) Date of publication and mention of the grant of the patent:
**11.04.2018 Bulletin 2018/15**

(51) Int Cl.:
***G10L 19/008*** *(2013.01)*   ***H04S 5/02*** *(2006.01)*

(21) Application number: **09778354.2**

(22) Date of filing: **04.09.2009**

(86) International application number:
**PCT/EP2009/006457**

(87) International publication number:
**WO 2010/028784 (18.03.2010 Gazette 2010/11)**

(54) **APPARATUS, METHOD AND COMPUTER PROGRAM FOR PROVIDING A SET OF SPATIAL CUES ON THE BASIS OF A MICROPHONE SIGNAL AND APPARATUS FOR PROVIDING A TWO-CHANNEL AUDIO SIGNAL AND A SET OF SPATIAL CUES**

VORRICHTUNG, VERFAHREN UND COMPUTERPROGRAMM ZUM BEREITSTELLEN EINER MENGE VON RÄUMLICHEN HINWEISEN AUF DER BASIS EINES MIKROFONSIGNALS UND VORRICHTUNG ZUM BEREITSTELLEN EINES ZWEIKANALIGEN AUDIOSIGNALS UND EINER MENGE VON RÄUMLICHEN HINWEISEN

APPAREIL, PROCÉDÉ ET PROGRAMME INFORMATIQUE PERMETTANT DE FOURNIR UN ENSEMBLE DE MARQUES SPATIALES SUR LA BASE D'UN SIGNAL DE MICROPHONE, ET APPAREIL PERMETTANT DE FOURNIR UN SIGNAL AUDIO À DEUX CANAUX ET UN ENSEMBLE DE MARQUES SPATIALES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **11.09.2008 US 95962 P**

(43) Date of publication of application:
**27.07.2011 Bulletin 2011/30**

(73) Proprietor: **Fraunhofer-Gesellschaft zur Förderung der angewandten Forschung e.V. 80686 München (DE)**

(72) Inventor: **FALLER, Christof 1025 St. Sulpice (CH)**

(74) Representative: **Burger, Markus et al Schoppe, Zimmermann, Stöckeler Zinkler, Schenk & Partner mbB Patentanwälte Radlkoferstraße 2 81373 München (DE)**

(56) References cited:
**EP-A1- 1 761 110        WO-A1-2007/010451 US-A1- 2008 004 729**

• **PULKKI V ET AL: "Directional Audio Coding: Filterbank and STFT-based Design" AUDIO ENGINEERING SOCIETY CONVENTION PAPER,, no. 6658, 20 May 2006 (2006-05-20) , pages 1-6, XP002478281 cited in the application**

**Description**

Background of the Invention

Embodiments according to the invention are related to an apparatus for providing a set of spatial cues associated with an upmix audio signal having more than two channels on the basis of a two-channel microphone signal. Further embodiments according to the invention are related to a corresponding method and to a corresponding computer program.

In the following, an introduction will be given into the field of parametric representation of audio signals.

Parametric representation of stereo and surround audio signals has been developed over the last few decades and has reached a mature status. Intensity stereo (R. Waal and R. Veldhuis, "Subband coding of stereophonic digital audio signals," Proc. IEEE ICASSP 1991, pp. 3601-3604, 1991.), (J. Herre, K. Brandenburg, and D. Lederer, "Intensity stereo coding," 96th AES Conv., Feb. 1994, Amsterdam (preprint 3799), 1994.) is used in MP3 (ISO/IEC, *Coding of moving pictures and associated audio for digital storage media at up to about 1.5 Mbit/s - Part 3: Audio.* ISO/IEC 11172-3 International Standard, 1993, jTC1/SC29/WG11.), MPEG-2 AAC (-, *Generic coding of moving pictures and associated audio information - Part 7: Advanced Audio Coding.* ISO/IEC 13818-7 International Standard, 1997, jTC1/SC29/WG11.), and other audio coders. Intensity stereo is the original parametric stereo coding technique, representing stereo signals by means of a downmix and level difference information. Binaural Cue Coding (BCC) (C. Faller and F. Baumgarte, "Efficient representation of spatial audio using perceptual parametrization," in Proc. IEEE Workshop on Appl. Of Sig. Proc. to Audio and Acoust., Oct. 2001, pp. 199-202.), (-, "Binaural Cue Coding - Part II: Schemes and applications," IEEE Trans. on Speech and Audio Proc., vol. 11, no. 6, pp. 520-531, Nov. 2003.) has enabled significant improvement of audio quality by means of using a different filterbank for parametric stereo/surround coding than for audio coding (F. Baumgarte and C. Faller, "Why Binaural Cue Coding is better than Intensity Stereo Coding," in Preprint 112th Conv. Aud. Eng. Soc., May 2002.), i.e. it can be viewed as a pre-and post-processor to a conventional audio coder. Further, it uses additional spatial cues for the parametrization than only level differences, i.e. also time differences and inter-channel coherence. Parametric Stereo (PS) (E. Schuijers, J. Breebaart, H. Purnhagen, and J. Engdegard, "Low complexity parametric stereo coding," in Preprint 117th Conv. Aud. Eng. Soc., May 2004.), which is standardized in IEC/ISO MPEG, uses phase differences as opposed to time differences, which has the advantage that artifact free synthesis is easier achieved than for time delay synthesis. The described parametric stereo concepts were also applied to surround sound by BCC. The MP3 Surround (J. Herre, C. Faller, C. Ertel, J. Hilpert, A. Hoelzer, and C. Spenger, "MP3 Surround: Efficient and compatible coding of multi-channel audio," in Preprint 116th Conv. Aud. Eng. Soc., May 2004.), (C. Faller, "Coding of spatial audio compatible with different playback formats," in Preprint 117th Conv. Aud. Eng. Soc., October 2004.), and MPEG Surround (J. Herre, K. Kjörling, J. Breebaart, C. Faller, S. Disch, H. Purnhagen, J. Koppens, J. Hilpert, J. Rödén, W. Oomen, K. Linzmeier, and K. S. Chong, "Mpeg surround - the iso/mpeg standard for efficient and compatible multi-channel audio coding," in Preprint 122th Conv. Aud. Eng. Soc., May 2007.) audio coders introduced spatial synthesis based on a stereo downmix, enabling stereo backwards compatibility and higher audio quality. A parametric multi-channel audio coder, such as BCC, MP3 Surround, and MPEG Surround, is often referred to as Spatial Audio Coder (SAC).

Recently a technique was proposed denoted spatial impulse response rendering (SIRR) (J. Merimaa and V. Pulkki, "Spatial impulse response rendering i: Analysis and synthesis," J. Aud. Eng. Soc., vol. 53, no. 12, 2005.), (V. Pulkki and J. Merimaa, "Spatial impulse response rendering ii: Reproduction of diffuse sound and listening tests," J. Aud. Eng. Soc., vol. 54, no. 1, 2006.), which synthesizes impulse responses in any direction (relative to the microphone position) based on a single audio channel (W-signal of Bformat (M. A. Gerzon, "Periphony: Width-Height Sound Reproduction," J. Aud. Eng. Soc., vol. 21, no. 1, pp. 2-10, 1973.), (K. Farrar, "Soundfield microphone," Wireless World, pp. 48-50, Oct. 1979.) plus spatial information obtained from the B-format signals. This technique was later also applied to audio signals as opposed to impulse responses and called directional audio coding (DirAC) (V. Pulkki and C. Faller, "Directional audio coding: Filterbank and STFTbased design," in Preprint 120th Conv. Aud. Eng. Soc., May 2006, p. preprint 6658.) DirAC can be viewed as a SAC, which is applicable directly to microphone signals. Various microphone configurations have been proposed for use with DirAC (J. Ahonen, G. D. Galdo, M. Kallinger, F. Küch, V. Pulkki, and R. Schultz-Amling, "Analysis and adjustment of planar microphone arrays for application in directional audio coding," in Preprint 124th Conv. Aud. Eng. Soc., May. 2008.), (J. Ahonen, M. Kallinger, F. Küch, V. Pulkki, and R. Schultz-Amling, "Directional analysis of sound field with linear microphone array and applications in sound reproduction," in Preprint 124th Conv. Aud. Eng. Soc., May. 2008.). DirAC is always based on Bformat signals and the signals of the various microphone configurations are processed to obtain B-format, which then is used in the directional analysis of DirAC.

In view of the above, it is the objective of the present invention to create a computationally efficient concept for obtaining a spatial cue information, while keeping the effort for the sound transduction reasonably small.

Summary of the Invention

This problem is solved by an apparatus for providing a set of spatial cues associated with an upmix audio signal having more than two channels on the basis of a two-channel microphone signal according to claim 1, by a method for providing a set of spatial cues associated with an upmix audio signal having more than two channels on the basis of a two-channel microphone signal according to claim 2 and by a computer program according to claim 3.

Brief Description of the Figures

Embodiments according to the invention will subsequently be described taking reference to the enclosed Figs., in which:

Fig. 1    shows a block schematic diagram of an apparatus for providing a set of spatial cues associated with an upmix audio signal having more than two channels on the basis of a two-channel microphone signal, according to an embodiment of the invention;

Fig. 2    shows a block schematic diagram of an apparatus for providing a set of spatial cues associated with an upmix audio signal having more than two channels, according to another embodiment of the invention;

Fig. 3    shows a block schematic diagram of an apparatus for providing a set of spatial cues associated with an upmix audio signal having more than two channels, according to another embodiment of the invention;

Fig. 4    shows a graphical representation of the directional responses of two dipole microphones, which can be used in embodiments of the invention;

Fig. 5a    shows a graphical representation of an amplitude ratio between left and right as a function of direction of arrival of sound for the dipole stereo microphone;

Fig. 5b    shows a graphical representation of a total power as a function of direction of arrival of the sound for the dipole stereo microphone;

Fig. 6    shows a graphical representation of directional responses of two cardioid microphones, which can be used in some embodiments of the invention;

Fig. 7a    shows a graphical representation of an amplitude ratio between left and right as a function of direction of arrival of sound for the cardioid stereo microphone;

Fig. 7b    shows a graphical representation of a total power as a function of direction of arrival of sound for the cardioid stereo microphone;

Fig. 8    shows a graphical representation of directional responses of two super-cardioid microphones, which can be used in some embodiments of the invention;

Fig. 9a    shows a graphical representation of an amplitude ratio between left and right as a function of direction of arrival of sound for the super-cardioid stereo microphone;

Fig. 9b    shows a graphical representation of total power as a function of direction of arrival of sound for the super-cardioid stereo microphone;

Fig. 10a    shows a graphical representation of a gain modification as a function of direction of arrival of sound for the cardioid stereo microphone;

Fig. 10b    shows a graphical representation of a total power (solid: Without gain modification, dashed: With gain modification) as a function of direction of arrival of sound for the cardioid stereo microphone;

Fig. 11a    shows a graphical representation of a gain modification as a function of direction of arrival of sound for the super-cardioid stereo microphone;

Fig. 11b    shows a graphical representation of a total power (solid: Without gain modification, dashed: With gain modification) as a function of direction of arrival of sound for the super-cardioid stereo microphone;

Fig. 12    shows a block schematic diagram of an apparatus for providing a set of spatial cues associated with an upmix audio signal having more than two channels, according to another embodiment of the invention;

Fig. 13    shows a block schematic diagram of an encoder, which converts the stereo microphone signal to SAC compatible downmix and side information, and also a corresponding (conventional) SAC decoder;

Fig. 14    shows a block schematic diagram of an encoder, which converts the stereo microphone signal to SAC compatible spatial side information and also a block schematic diagram of the corresponding SAC decoder with downmix processing;

Fig. 15    shows a block schematic diagram of a blind SAC decoder, which can be directly fed with stereo microphone signals, wherein the SAC downmix and the SAC spatial side information are obtained by analysis processing of the stereo microphone signal; and

Fig. 16    shows a flow chart of a method for providing a set of spatial cues according to an embodiment of the invention.

## Detailed Description of the Embodiments

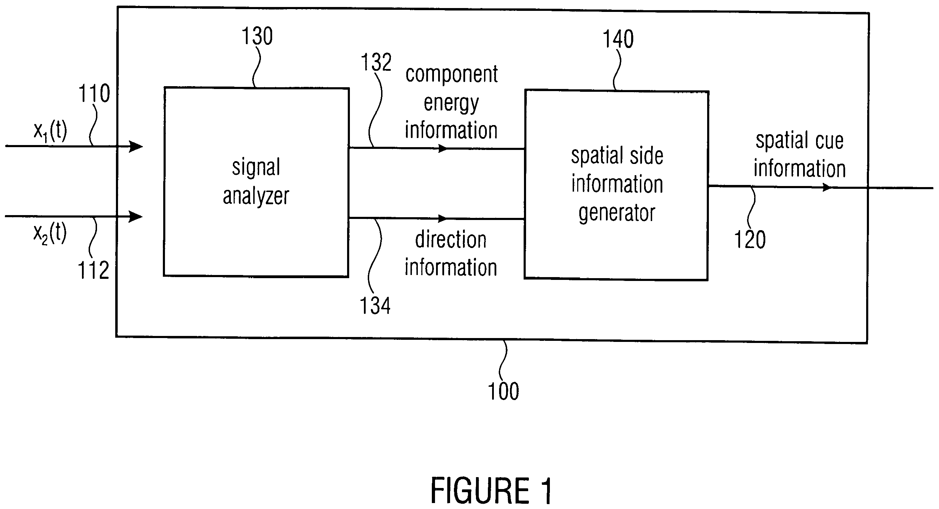

Fig. 1 shows a block schematic diagram of an apparatus 100 for providing a set of spatial cues associated with an upmix audio signal having more than two channels on the basis of a two-channel microphone signal. The apparatus 100 is configured to receive a two-channel microphone signal, which may, for example, comprise a first channel signal 110 (also designated with $x_1$) and a second channel signal 112 (also designated with $x_2$). The apparatus 100 is further configured to provide a spatial cue information 120.

The apparatus 100 comprises a signal analyzer 130, which is configured to receive the first channel signal 110 and the second channel signal 112. The signal analyzer 130 is configured to obtain a component energy information 132 and a direction information 134 on the basis of the two-channel microphone signals, i.e. on the basis of the first channel signal 110 and the second channel signal 112. Preferably, the signal analyzer 130 is configured to obtain the component energy information 132 and the direction information 134 such that the component energy information 132 describes estimates of energies of a direct sound component of the two-channel microphone signal and of a diffuse sound component of the two-channel microphone signal, and such that the direction information 134 describes an estimate of a direction from which the direct sound component of the two-channel microphone signal 110, 112 originates.

The apparatus 100 also comprises a spatial side information generator 140, which is configured to receive the component energy information 132 and the direction information 134, and to provide, on the basis thereof, the spatial cue information 120. Preferably, the spatial side information generator 140 is configured to map the component energy information 132 of the two-channel microphone signal 110, 112 and the direction information 134 of the two-channel microphone signal 110, 112 onto the spatial cue information 120. Accordingly, the spatial side information 120 is obtained such that the spatial cue information 120 describes a set of spatial cues associated with an upmix audio signal having more than two channels.

Thus, the apparatus 120 allows for a computationally very efficient computation of the spatial cue information, which is associated with an upmix audio signal having more than two channels on the basis of a two-channel microphone signal. The signal analyzer 130 is capable of extracting a large amount of information from the two-channel microphone signal, namely a component energy information describing both an estimate of an energy of a direct sound component and an estimate of an energy of a diffuse sound component and a direction information describing an estimate of a direction from which the direct sound component of the two-channel microphone signal originates. It has been found that this information, which can be obtained by the signal analyzer on the basis of the two-channel microphone signal 110, 112, is sufficient to derive the spatial cue information even for an upmix audio signal having more than two channels. Importantly, it has been found that the component energy 132 and the direction information 134 are sufficient to directly determine the spatial cue information 120 without actually using the upmix audio channels as an intermediate quantity.

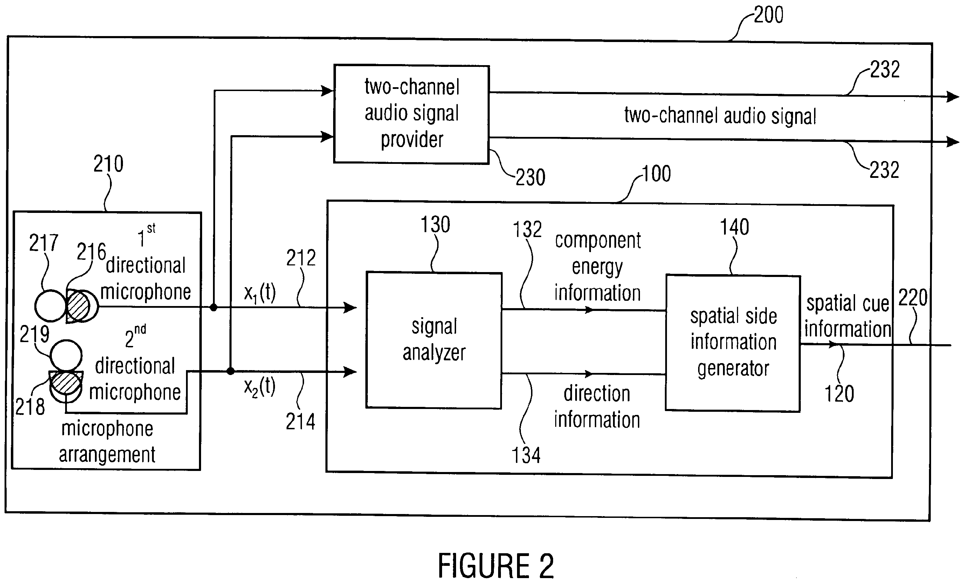

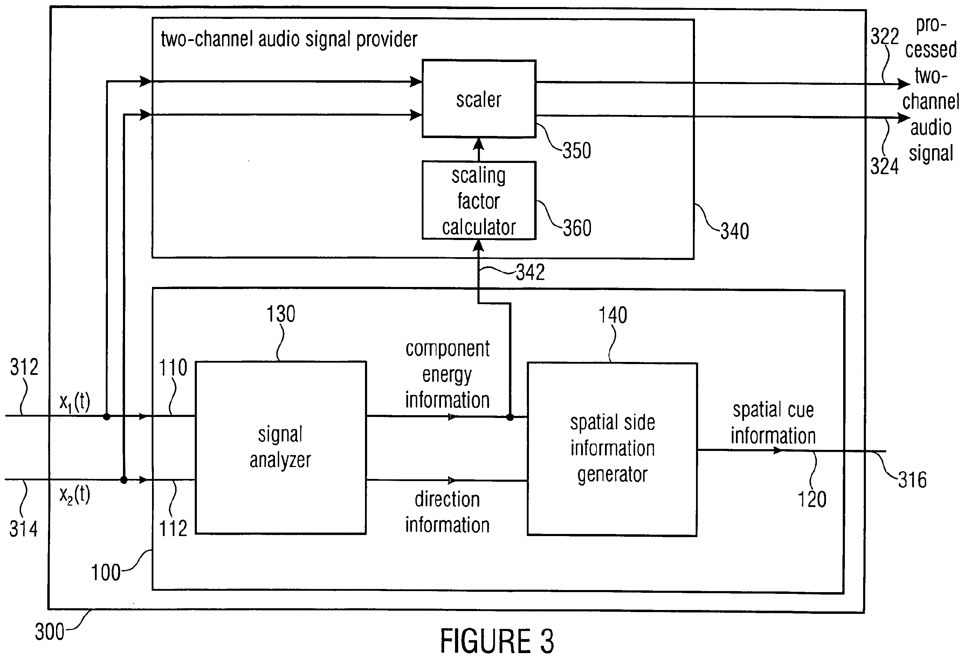

In the following, some extensions of the apparatus 100 will be described taking reference to Figs. 2 and 3.

Fig. 2 shows a block schematic diagram of an apparatus 200 for providing a two-channel audio signal and a set of spatial cues associated with an upmix audio signal having more than two channels. The apparatus 200 comprises a microphone arrangement 210 configured to provide a two-channel microphone signal comprising a first channel signal 212 and a second channel signal 214. The apparatus 200 further comprises an apparatus 100 for providing a set of spatial cues associated with an upmix audio signal having more than two channels on the basis of a two-channel microphone signal, as described with reference to Fig. 1. The apparatus 100 is configured to receive, as its input signals, the first channel signal 212 and the second channel signal 214 provided by the microphone arrangement 210. The apparatus 100 is further configured to provide a spatial cue information 220, which may be identical to the spatial cue information 120. The apparatus 200 further comprises a two-channel audio signal provider 230, which is configured to receive the first channel signal 212 and the second channel signal 214 provided by the microphone arrangement 210, and to provide the first channel microphone signal 212 and the second channel microphone signal 214, or processed versions thereof, as a two channel audio signal 232.

The microphone arrangement 210 comprises a first directional microphone 216 and a second directional microphone 218. The first directional microphone 216 and the second directional microphone 218 are preferably spaced by no more than 30 centimeters. Accordingly, the signals received by the first directional microphone 216 and the second directional microphone 218 are strongly correlated, which has been found to be beneficial for the calculation of the component energy information and the direction information by the signal analyzer 130. However, the first directional microphone 216 and the second directional microphone 218 are oriented such that a directional characteristic 219 of the second directional microphone 218 is a rotated version of a directional characteristic 217 of the first directional microphone 216. Accordingly, the first channel microphone signal 212 and the second channel microphone signal 214 are strongly correlated (due to the spatial proximity of the microphones 216, 218) yet different (due to the different directional characteristics 217, 219 of the directional microphones 216, 218). In particular, a directional signal incident on the microphone arrangement 210 from an approximately constant direction causes strongly correlated signal components of the first channel microphone signal 212 and the second channel microphone signal 214 having a temporally constant direction-dependent amplitude ratio (or intensity ratio). An ambient audio signal incident on the microphone array 210 from temporally-varying directions causes signal components of the first channel microphone signal 212 and the second channel microphone signal 214 having a significant correlation, but temporally fluctuating amplitude ratios (or intensity ratios). Accordingly, the microphone arrangement 210 provides a two-channel microphone signal 212, 214, which allows the signal analyzer 130 of the apparatus 100 to distinguish between direct sound and diffuse sound even though the microphones 216, 218 are closely spaced. Thus, the apparatus 200 constitutes an audio signal provider, which can be implemented in a spatially compact form, and which is, nevertheless, capable of providing spatial cues associated with an upmix signal having more than two channels. The spatial cues 220 can be used in combination with the provided two-channel audio signal 232 by a spatial audio decoder to provide a surround sound output signal.

Fig. 3 shows a block schematic diagram of an apparatus 300 for providing a processed two-channel audio signal and a set of spatial cues associated with an upmix signal having more than two channels on the basis of a two-channel microphone signal. The apparatus 300 is configured to receive a two-channel microphone signal comprising a first channel signal 312 and a second channel signal 314. The apparatus 300 is configured to provide a spatial cue information 316 on the basis of the two-channel microphone signal 312, 314. In addition, the apparatus 300 is configured to provide a processed version of the two-channel microphone signal wherein the processed version of the two-channel microphone signal comprises a firsts channel signal 322 and a second channel signal 324.

The apparatus 300 comprises an apparatus 100 for providing a set of spatial cues associated with an upmix audio signal having more than two channels on the basis of the two-channel signal 312, 314. In the apparatus 300, the apparatus 100 is configured to receive, as its input signals 110, 112, the first channel signal 312 and the second channel signal 314. Further, the spatial cue information 120 provided by the apparatus 100 constitutes the output information 316 of the apparatus 300.

In addition, the apparatus 300 comprises a two-channel audio signal provider 340, which is configured to receive the first channel signal 312 and the second channel signal 314. The two-channel audio signal provider 340 is further configured to also receive a component energy information 342, which is provided by the signal analyzer 130 of the apparatus 100. The two-channel audio signal provider 340 is further configured to provide the first channel signal 322 and the second channel signal 324 of the processed two-channel audio signal.

The two-channel audio signal provider preferably comprises a scaler 350, which is configured to receive the first channel signal 312 of the two-channel microphone signal, and to scale the first channel signal 312, or individual time/frequency bins thereof, to obtain the first channel signal 322 of the processed two-channel audio signal. The scaler 350 is also configured to receive the second channel signal 314 of the two-channel microphone signal and to scale the second channel signal 314, or individual time/frequency bins thereof, to obtain the second channel signal 324 of the processed two-channel audio signal.

The two-channel audio signal provider 340 also comprises a scaling factor calculator 360, which is configured to compute scaling factors to be used by the scaler 350 on the basis of the component energy information 342. Accordingly, the component energy information 342, which describes estimates of energies of a direct sound component of the two-channel microphone signal and also of a diffuse sound component of the two-channel microphone signal, determines the scaling of the first channel signal 312 and the second channel signal 314 of the two-channel microphone signal, which scaling is applied to derive the first channel signal 322 and the second channel signal 324 of the processed two-channel audio signal from the two-channel microphone signal. Accordingly, the same component energy information is used to determine the scaling of the first channel signal 312 and of the second channel signal 314 of the two-channel microphone signal and also the spatial cue information 120. It has been found that the double-usage of the component energy information 342 is a computationally very efficient solution and also ensures a good consistency between the processed two-channel audio signal and the spatial cue information. Accordingly, it is possible to generate the processed two-channel audio signal and the spatial cue information such that they allow for a surround playback of an audio content represented by the two-channel microphone signals 312, 314 using a standardized surround decoder.

Implementation Details - Stereo Microphones and their Suitability for Surround Recording

In this section, various two-channel microphone configurations are discussed with respect to their suitability for generating a surround sound signal by means of post-processing. The next section applies these insights to the use of spatial audio coding (SAC) with stereo microphones.

The microphone configurations described here may, for example, be used to obtain the two-channel microphone signal 110, 112 or the two-channel microphone signal 212, 214 or the two-channel microphone signal 312, 314. The microphone configurations described here may be used in the microphone arrangement 210.

Since human source localization largely depends on direct sound, due to the "law of the first wavefront" (J. Blauert, Spatial Hearing: The Psychophysics of Human Sound Localization, revised ed. Cambridge, Massachusetts, USA: The MIT Press, 1997), the analysis in this section is carried out for a single direct far-field sound arriving from a specific angle $\alpha$ at the microphone in free-field (no reflections). Without loss of generality, for simplicity, we are assuming that the microphones are coincident, i.e. the two microphone capsules (e.g. the directional microphones 216, 218) are located in the same point. Given these assumptions, the left and right microphone signals can be written as:

$$\begin{aligned} x_1(n) &= r_1(\alpha)s(n) \\ x_2(n) &= r_2(\alpha)s(n) \,, \end{aligned} \qquad (1)$$

where n is the discrete time index, $s(n)$ corresponds to the sound pressure at the microphone location, $r_1(\alpha)$ is the directional response of the left microphone for sound arriving from angle $\alpha$, and $r_2(\alpha)$ is the corresponding response of the right microphone. The signal amplitude ratio between the right and left microphone is

$$a(\alpha) = \frac{r_2(\alpha)}{r_1(\alpha)} \,. \qquad (2)$$

Note that the amplitude ratio captures the level difference and information whether the signals are in phase $(a(\alpha) > 0)$ or out of phase $(a(\alpha) < 0)$. If a complex signal representation (e.g. of the microphone signals $x_1(n)$, $x_2(n)$) is used, such as a short-time Fourier transform, the phase of $a(\alpha)$ gives information about the phase difference between the signals and information about the delay. This information is useful when the microphones are not coincident.

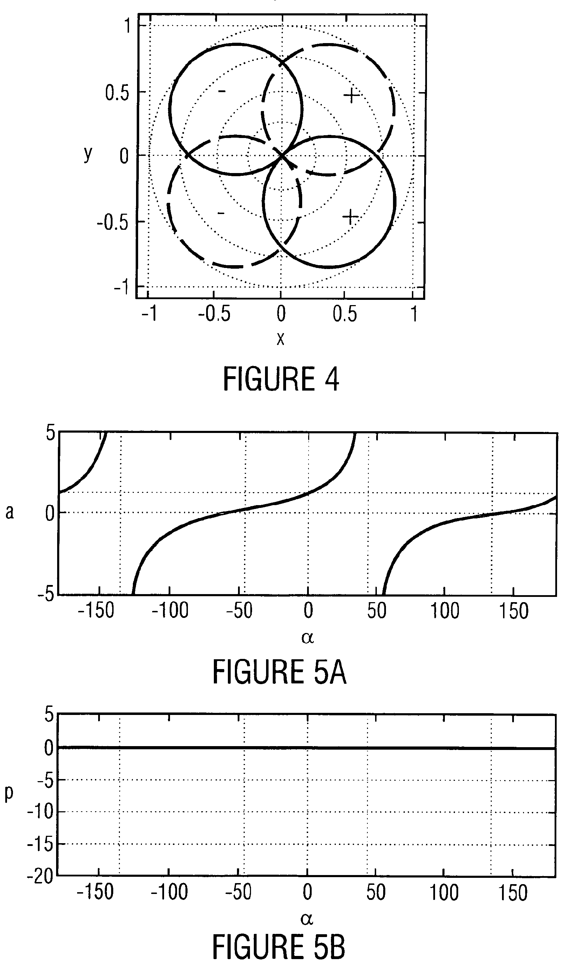

Figure 4 illustrates the directional responses of two coincident dipole (figure of eight) microphones pointing towards ±45 degrees relative to the forward x-axis. The parts of the responses marked with a + capture sound with a positive sign and the parts marked with a - capture sound with a negative sign. The amplitude ratio as a function of direction of arrival of sound is shown in Figure 5(a). Note that the amplitude ratio $a(\alpha)$ is not an invertible function, that is for each amplitude ratio value exist two directions of arrival which could have resulted in that amplitude ratio. If sound arrives only from front directions, i.e. within ±90 degrees relative to the positive x direction in Figure 4, the amplitude ratio uniquely indicates from where sound arrived. However, for each direction in the front there exists a direction in the rear resulting in the same amplitude ratio captures the level difference and amplitude ratio. Figure 5(b) shows the total response of the two dipoles in dB, i.e.

$$p(\alpha) = 10 \log_{10} \left( r_1^2(\alpha) + r_2^2(\alpha) \right) \,. \qquad (3)$$

Note that the two dipole microphones capture sound with the same total response from all directions (0 dB).

From the above discussion it can be concluded that two dipole microphones with responses as shown in Figure 4 are not well suited for surround sound signal generation because of these reasons:

- Only for an angular range of 180 degrees does the amplitude ratio uniquely determine the direction of sound arrival.

- Rear and front sound is captured with the same total response. There is no rejection of sound from directions outside of the range in which the amplitude ratio is unique.

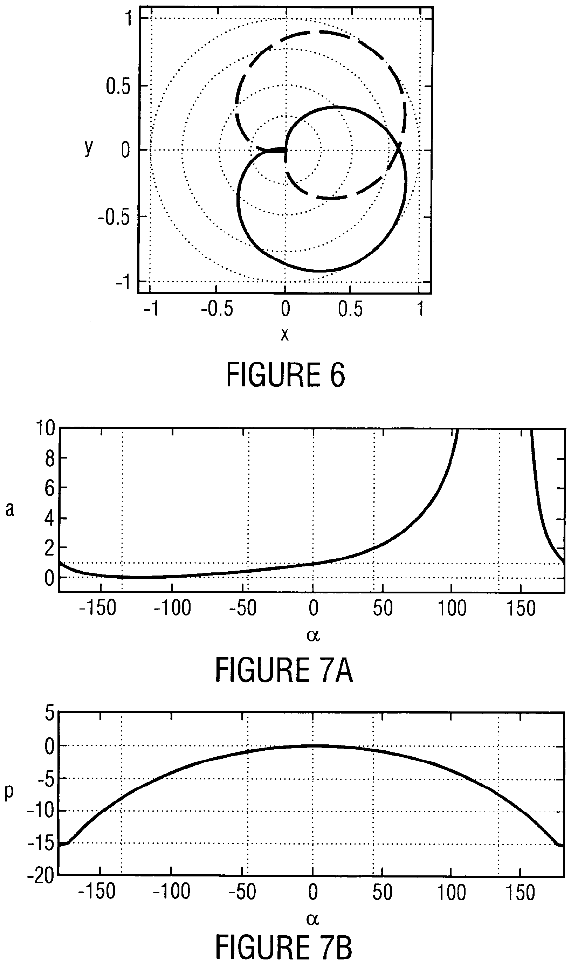

The next microphone configuration considered consists of two cardioids pointing towards $\pm45$ degrees with responses as shown in Figure 6. The result of a similar analysis as previously is shown in Figure 7. Figure 7(a) shows $a(\alpha)$ as a function of direction of arrival of sound. Note that for directions between -135 and 135 degrees $a(\alpha)$ uniquely determines the direction of arrival of the sound at the microphones. Figure 7(b) shows the total response as a function of direction of arrival. Note that sound from the front directions is captured more strongly and sound is captured more weakly the more it arrives from the rear.

From this discussion it can be concluded that two cardioid microphones with responses as shown in Figure 6 are suitable for surround sound generation for the following reasons:

- Three quarters of all possible directions of arrival (270 degrees) can uniquely be determined by means of measuring the amplitude ratio $a(\alpha)$, that is, sound arriving from directions between $\pm135$ degrees.

- Sound arriving from directions which can not uniquely be determined, i.e. from the rear between 135 and 225 degrees, is attenuated, partially mitigating the negative effect of interpreting these sounds as coming from front directions.

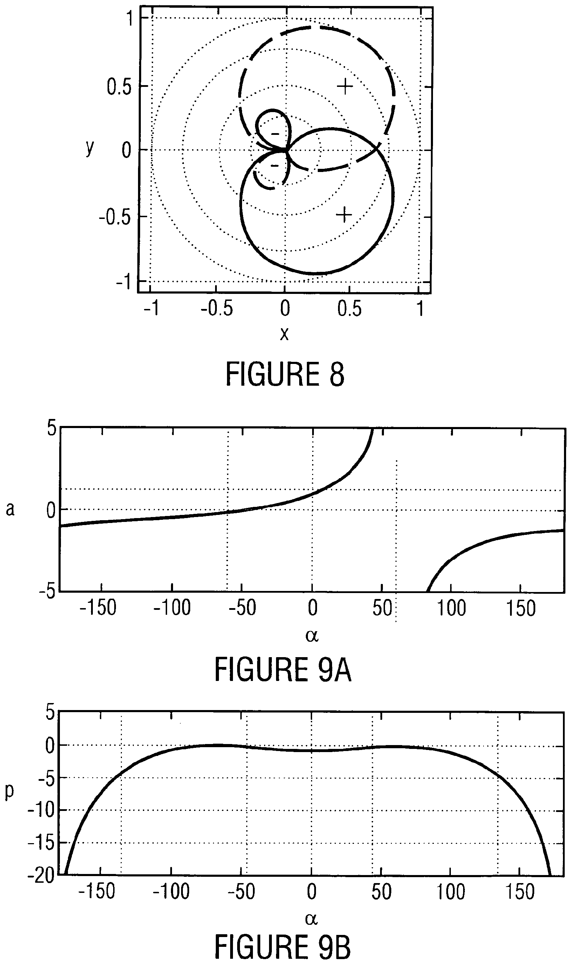

A particularly suitable microphone configuration involves the use of super-cardioid microphones or other microphones with a negative rear lobe. The responses of two super-cardioid microphones, pointing towards about $\pm60$ degrees, are shown in Figure 8. The amplitude ratio as a function of angle of arrival is shown in Figure 9(a). Note that the amplitude ratio uniquely determines the direction of sound arrival. This is so, because we have chosen the microphone directions such that both microphones have a null response at 180 degrees. The other null responses are at about $\pm60$ degrees.

Note that this microphone configuration picks up sound in phase $(a(\alpha) > 0)$ for front directions in the range of about $\pm60$ degrees. Rear sound is captured out of phase $(a(\alpha) < 0)$, i.e. with a different sign. Matrix surround encoding (J. M. Eargle, "Multichannel stereo matrix systems: An overview," IEEE Trans. on Speech and Audio Proc., vol. 19, no. 7, pp. 552-559, July 1971.), (K. Gundry, "A new active matrix decoder for surround sound," in Proc. AES 19th Int. Conf, June 2001.) gives similar amplitude ratio cues (C. Faller, "Matrix surround revisited," in Proc. 30th Int. Conv. Aud. Eng. Soc., March 2007.) in the matrix encoded two-channel signals. From this perspective, this microphone configuration is suitable for generating a surround sound signal by means of processing the captured signals.

Figure 9(b) illustrates the total response of the microphone configuration as a function of direction of arrival. In a large range of directions, sound is captured with similar intensity. Towards the rear the total response is decaying until it reaches zero (minus infinity dB) at 180 degrees.

The function

$$\hat{\alpha} = f(a) \tag{4}$$

yields the direction of arrival of sound as a function of the amplitude ratio between the microphone signals. The function in (4) is obtained by inverting the function given in (2) within the desired range in which (2) is invertible.

For the example of two cardioids as shown in Figure 6, the direction of arrival will be in the range of $\pm135$ degrees. If sound arrives from outside this range, its amplitude ratio will be interpreted wrongly and a direction in the range between $\pm135$ degrees will be returned by the function. For the example of two super-cardioid microphones as shown in Figure 8, the determined direction of arrival can be any value except 180 degrees since both microphones have their null at 180 degrees.

As a function of direction of arrival, the gain of the microphone signals may need to be modified in order to capture sound with the same intensity within a desired range of directions. The modification of the gain of the microphone signals may be performed prior to a processing of the microphone signals in the apparatus 100, for example, within the microphone arrangement 210. The gain modification as a function of direction of arrival is

$$g(\hat{\alpha}) = \min\{-p(\hat{\alpha}), G\}, \tag{5}$$

where G determines an upper limit in dB for the gain modification. Such an upper limit is often necessary to prevent that the signals are scaled by too large a factor.

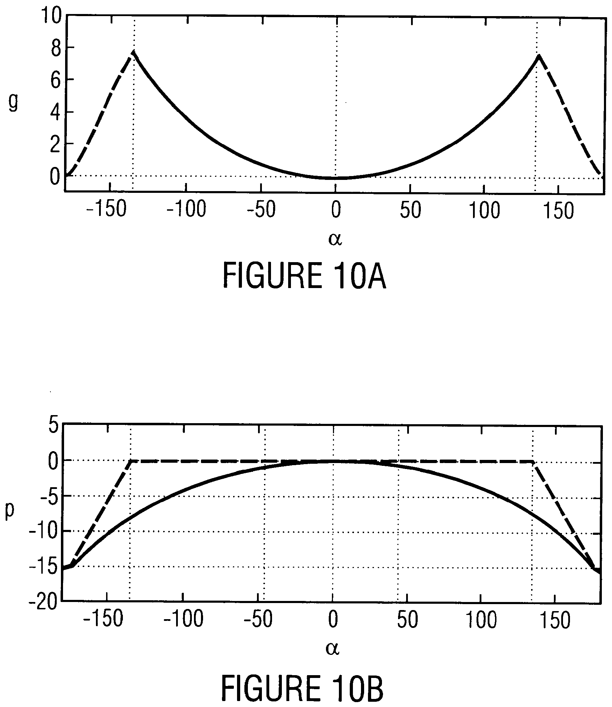

The solid line in Figure 10(a) shows the gain modification within the desired direction of arrival range of ±135 for the case of the two cardioids. The dashed line in Figure 10(a) indicates the gain modification that is applied to sound from rear directions, i.e. between 135 and 225 degrees, where (4) yields a (wrong) front direction. For example for a direction of arrival of $\alpha$ = 180 degrees, the estimated direction of arrival (4) is $\hat{\alpha}$ = 0 degrees. Therefore the gain modification is the same as for $\alpha$ = 0 degrees, i.e. 0 dB. Figure 10(b) shows the total response of the two cardioids (solid) and the total response if the gain modification is applied (dashed). The limit G in (4) was chosen to be 10 dB, but is not reached as indicated by the data in Figure 7(a).

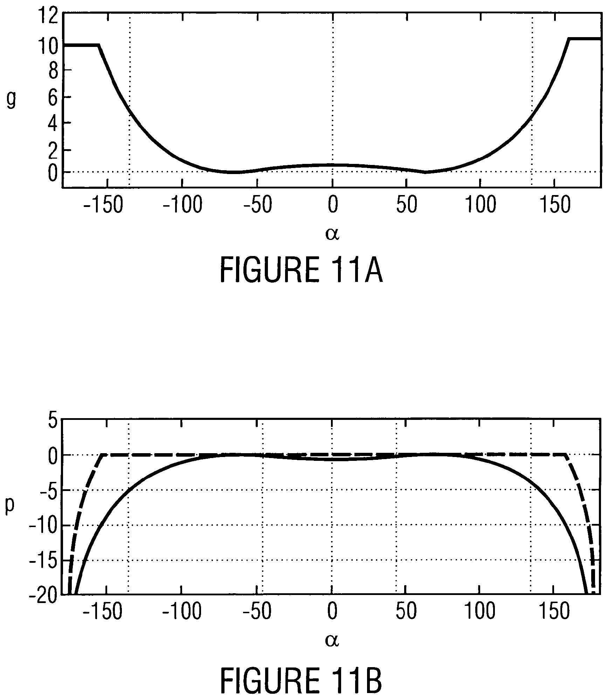

A similar analysis is carried out for the case of the supercardioid microphone pair. Figure 11(a) shows the gain modification for this case. Note that near 180 degrees the limit of G = 10 dB is reached. Figure 11(b) shows the total response (solid) and the total response if the gain modification is applied (dashed). Due to the limitation of the gain modification, the total response is decreasing towards the rear (due to the nulls at 180 degrees, infinite modification would be required). After gain modification, sound is captured with full level (0 dB) approximately in a range of 160 degrees, making this stereo microphone configuration in principle very suitable for capturing signals to be converted to surround sound signals.

The previous analysis shows that in principle two microphones can be used to capture signals, which contain sufficient information to generate surround sound audio signals. In the following we are explaining how to use spatial audio coding (SAC) to achieve that.

Implementation Details - Using Stereo Microphones with Spatial Audio Coders

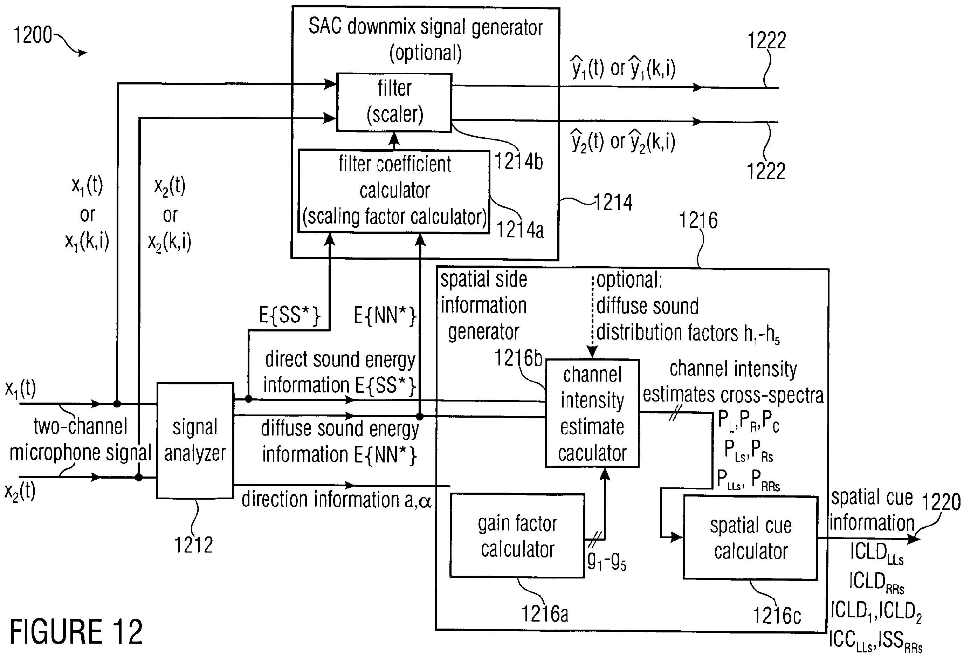

In the following, the inventive concept will be described in detail taking reference to Fig. 12, which shows an embodiment of an apparatus for providing both a processed microphone signal and a spatial cue information describing a set of spatial cues associated with an upmix audio signal having more than two channels on the basis of a two-channel input audio signal (typically a two-channel microphone signal).

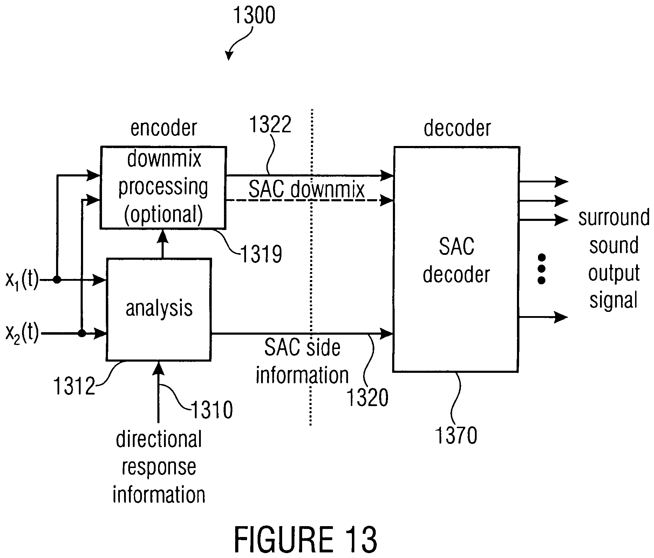

The apparatus 1200 of Fig. 12 illustrates the involved functionalities. However, three different configurations will be described on how to use a stereo microphone with a spatial audio coder (SAC) to generate a multi-channel surround signal. The three configurations, which will be explained taking reference to Figs. 13, 14 and 15 may comprise identical functionalities, wherein the blocks implementing said functionalities are distributed differently to an encoder side and a decoder side.

It should also be noted that in the previous section, two examples of suitable stereo microphone configurations were given (namely the arrangement comprising two cardioid microphones and the arrangement comprising two super-cardioid microphones). However, other microphone arrangements, like the arrangement comprising dipole microphones, may naturally also be used, even though the performance may be somewhat degraded.

Fully SAC Backwards Compatible System

The first possibility is to use an encoder generating a downmix and bitstream compatible with a SAC. Figures 12 and 13 illustrate a SAC compatible encoders 1200 and 1300. Given the two microphone signals $x_1(t)$, $x_2(t)$ and the corresponding directional response information 1310, SAC side information 1220, 1320 is generated, which is compatible with the SAC decoder 1370. Additionally, the two microphone signals $x_1(t)$, $x_2(t)$ are processed to generate a downmix signal 1322 compatible with the SAC decoder 1370. Note that there is no need to generate a surround audio signal at the encoder 1200, 1300, resulting in low computational complexity and low memory requirements.

Fully SAC Backwards Compatible System - Microphone Signal Analysis

In the following, a microphone signal analysis will be described, which may be performed by the signal analyzer 1212 or by the analysis unit 1312.

The time-frequency representations (e.g. short-time Fourier transform) of the microphone signals $x_1(n)$ and $x_2(n)$ (or $x_1(t)$ and $x_2(t)$ are $X_1(l, i)$ and $X_2(k, i)$, where $k$ and $i$ are time and frequency indices. It is assumed that $X_1(k, i)$ and $X_2(k, i)$ can be modeled as

$$\begin{aligned} X_1(k,i) &= S(k,i) + N_1(k,i) \\ X_2(k,i) &= a(k,i)S(k,i) + N_2(k,i), \end{aligned}$$

$$(6)$$

where $a(k, i)$ is a gain factor, $S(k, i)$ is direct sound, and $N_1(k, i)$ and $N_2(k, i)$ represents diffuse sound. Note that in the following, for simplicity of notation, we are often ignoring the time and frequency indices $k$ and $i$. The signal model (6) is similar to the signal model used for stereo signal analysis in (-, "Multi-loudspeaker playback of stereo signals," J. of the Aud. Eng. Soc., vol. 54, no. 11, pp. 1051-1064, Nov. 2006.), except that $N_1$ and $N_2$ are not assumed to be independent.

Used later, the normalized cross-correlation coefficient between the two microphone signals is defined as

$$\Phi = \frac{\mathrm{E}\{X_1 X_2^\star\}}{\sqrt{\mathrm{E}\{X_1 X_1^\star\}\mathrm{E}\{X_2 X_2^\star\}}},$$

$$(7)$$

where * denotes complex conjugate and $E\{.\}$ is an averaging operation.

For horizontally diffuse sound, $\Phi$ is

$$\Phi_{\mathrm{diff}} = \frac{\int_{-\pi}^{\pi} r_1(\phi) r_2(\phi) \mathrm{d}\phi}{\sqrt{\int_{-\pi}^{\pi} r_1(\phi)^2 \mathrm{d}\phi \int_{-\pi}^{\pi} r_2(\phi)^2 \mathrm{d}\phi}},$$

$$(8)$$

as can easily be verified using similar assumptions as used in (-, "A highly directive 2-capsule based microphone system," in Preprint 123rd Conv. Aud. Eng. Soc., Oct. 2007.) for normalized cross-correlation coefficient computation.

The SAC downmix signal and side information are computed as a function of $a$, $E\{SS^\star\}$, $E\{N_1 N_1^\star\}$, and $E\{N_2 N_2^\star\}$, where $E\{.\}$ is a short-time averaging operation. These values are derived in the following.

From (6) it follows that

$$\begin{aligned}
\mathrm{E}\{X_1 X_1^\star\} &= \mathrm{E}\{SS^\star\} + \mathrm{E}\{N_1 N_1^\star\} \\
\mathrm{E}\{X_2 X_2^\star\} &= a^2 \mathrm{E}\{SS^\star\} + \mathrm{E}\{N_2 N_2^\star\} \\
\mathrm{E}\{X_1 X_2^\star\} &= a\mathrm{E}\{SS^\star\} + \mathrm{E}\{N_1 N_2^\star\}.
\end{aligned}$$

$$(9)$$

It is assumed that the amount of diffuse sound in both microphone signals is the same, i.e. $E\{N_1 N_1^\star\}, = E\{N_2 N_2^\star\} = E\{NN^\star\}$ and that the normalized cross-correlation coefficient between $N_1$ and $N_2$ is $\Phi_{\mathrm{diff}}$ (8). Given these assumptions, (9) can be written as

$$\begin{aligned}
\mathrm{E}\{X_1 X_1^\star\} &= \mathrm{E}\{SS^\star\} + \mathrm{E}\{NN^\star\} \\
\mathrm{E}\{X_2 X_2^\star\} &= a^2 \mathrm{E}\{SS^\star\} + \mathrm{E}\{NN^\star\} \\
\mathrm{E}\{X_1 X_2^\star\} &= a\mathrm{E}\{SS^\star\} + \Phi_{\mathrm{diff}}\mathrm{E}\{NN^\star\}.
\end{aligned}$$

$$(10)$$

Elimination of $E\{SS^\star\}$ and $a$ in (9) yields the quadratic equation

$$A E\{NN*\}^2 + B E\{NN*\} + C = 0$$

$$(11)$$

with

$$A = 1 - \Phi_{\mathrm{diff}}^2 ,$$
$$B = 2\Phi_{\mathrm{diff}}\mathrm{E}\{X_1 X_2^\star\} - \mathrm{E}\{X_1 X_1^\star\} - \mathrm{E}\{X_2 X_2^\star\} ,$$
$$C = \mathrm{E}\{X_1 X_1^\star\}\mathrm{E}\{X_2 X_2^\star\} - \mathrm{E}\{X_1 X_2^\star\}^2 . \tag{12}$$

Then $E\{NN^*\}$ is one of the two solutions of (11), the physically possible once, i.e.

$$\mathrm{E}\{NN^\star\} = \frac{-B - \sqrt{B^2 - 4AC}}{2A} . \tag{13}$$

The other solution of (11) yields a diffuse sound power larger than the microphone signal power, which is physically impossible.

Given (13), it is easy to compute $a$ and $E\{SS^*\}$:

$$a = \sqrt{\frac{\mathrm{E}\{X_2 X_2^\star\} - \mathrm{E}\{NN^\star\}}{\mathrm{E}\{X_1 X_1^\star\} - \mathrm{E}\{NN^\star\}}}$$
$$\mathrm{E}\{SS^\star\} = \mathrm{E}\{X_1 X_1^\star\} - \mathrm{E}\{NN^\star\} . \tag{14}$$

The direction of direct sound arrival $\alpha(k,i)$ is computed using $\alpha(k,i)$ in (4)

To summarize the above, a direct sound energy information E{SS*}, a diffuse sound energy information E{NN*} and a direction information a, $\alpha$ is obtained by the signal analyzer 1212 or the analysis unit 1312. Knowledge of the directional characteristic of the microphones is exploited here. The knowledge of the directional characteristics of the microphones providing the two-channel microphone signal allows the computation of an estimated correlation coefficient $\Phi_{\mathrm{diff}}$ (for example, according to equation (8)), which reflects the fact that diffuse sound signals exhibit different cross correlation characteristics than directional sound components. The knowledge of the microphone characteristics may be either applied at a design time of the signal analyzer 1212, 1312 or may be exploited at a run time. In some cases, the signal analyzer 1212, 1312 may be configured to receive an information describing the directional characteristics of the microphones, such that the signal analyzer 1212, 1312 can be dynamically adapted to the microphone characteristics.

To further summarize the above, it can be said that the signal analyzer 1212, 1312 is configured to solve a system of equations describing :

(1) a relationship between an estimated energy (or intensity) of a first channel microphone signal of the two-channel microphone signal, the estimated energy (or intensity) of the direct sound component of the two-channel microphone signal, and the estimated energy of the diffuse sound component of the two-channel microphone signal;

(2) a relationship between an estimated energy (or intensity) of a second channel microphone signal of the two-channel microphone signal, the estimated energy (or intensity) of the direct sound component of the two-channel microphone signal, and the estimated energy of the diffuse sound component of the two-channel microphone signal, and;

(3) a relationship between an estimated cross-coorelation value of the first channel microphone signal and the second microphone signal, the estimated energy (or intensity) of the direct sound component of the two-channel microphone signal, and the estimated energy (or intensity) of the diffuse sound component of the two-channel microphone signal;

(see equation (10).

When solving this system of equations, the signal analyzer may take into account the assumption that the energy of the diffuse sound component is equal in the first channel microphone signal and the second channel microphone signal. In addition, it may be taken into account that the ratio of energies of the direct sound component in the first microphone signal and the second microphone signal is direction-dependent. Moreover, it may be taken into account that a normalized cross correlation coefficient between the diffuse sound components in the first microphone signal and the second microphone signal takes a constant value smaller than 1, which constant value is dependent on directional characteristics of the microphones providing the first microphone signal and the second microphone signal. The cross correlation coefficient, which is given in equation (8) may be pre-computed at design time or may be computed at run time on the basis of an information describing the microphone characteristics.

Accordingly, it is possible to firstly compute the autocorrelation of the first microphone signal $x_1$, the autocorrelation of the second microphone signal $x_2$ and the cross correlation between the first microphone signal $x_1$ and the second microphone signal $x_2$, and to derive the component energy information and the direction information from the obtained autocorrelation values and the obtained cross correlation value, for example, using equations (12), (13) and (14).

The microphone signal analysis discussed before may, for example, be performed by the signal analyzer 1212 or by the analysis unit 1312.

Fully SAC Backwards Compatible System - Generation of SAC Downmix Signal

In a preferred embodiment, the inventive apparatus comprises a SAC downmix signal generator 1214, 1314, which is configured to perform a downmix processing in order to provide a SAC downmix signal 1222, 1322 on the basis of the two-channel microphone signal $x_1$, $x_2$. Thus, the SAC downmix signal generator 1214 and the downmix processing 1314 may be configured to process or modify the two-channel microphone signal $x_1$, $x_2$ such that the processed version 1222, 1322 of the two-channel microphone signal $x_1$, $x_2$ comprise the characteristics of a SAC downmix signal and can be applied as an input signal to a conventional SAC decoder. However, it should be noted that the SAC downmix generator 1214 and the downmix processing 1314 should be considered as being optional.

The microphone signals ($x_1$, $x_2$) are sometimes not directly suitable as a downmix signal, since direct sound from the side and rear is attenuated relative to sound arriving from forward directions. The direct sound contained in the microphone signals ($x_1$, $x_2$) needs to be gain compensated by $g(\alpha)$ dB (5), i.e. ideally the SAC downmix should be

$$
\begin{aligned}
Y_1(k,i) &= 10^{\frac{g(\alpha(k,i))}{20}} S(k,i) + 10^{\frac{h}{20}} N_1(k,i) \\
Y_2(k,i) &= 10^{\frac{g(\alpha(k,i))}{20}} a(k,i) S(k,i) + 10^{\frac{h}{20}} N_2(k,i) \,,
\end{aligned}
\tag{15}
$$

where $h$ is a gain in dB controlling the amount of diffuse sound in the downmix. (Here it is assumed that a downmix matrix is used by the SAC with the same weights for front side and rear channels. If smaller weights are used for the rear channels, as optionally recommended by ITU (Rec. ITU-R BS.775, *Multi-Channel Stereophonic Sound System with or without Accompanying Picture.* ITU, 1993, http://www.itu.org.), this has to be considered additionally.)

Wiener filters (S. Haykin, Adaptive Filter Theory (third edition). Prentice Hall, 1996.) are used to estimate the desired downmix signal,

$$
\begin{aligned}
\hat{Y}_1(k,i) &= H_1(k,i) X_1(k,i) \\
\hat{Y}_2(k,i) &= H_2(k,i) X_2(k,i) \,,
\end{aligned}
\tag{16}
$$

were the Wiener filters are

$$
\begin{aligned}
H_1 &= \frac{\mathrm{E}\{X_1 Y_1^\star\}}{\mathrm{E}\{X_1 X_1^\star\}} \\
H_2 &= \frac{\mathrm{E}\{X_2 Y_2^\star\}}{\mathrm{E}\{X_2 X_2^\star\}} \,.
\end{aligned}
\tag{17}
$$

Note that for brevity of notation the time and frequency indices, *k* and *i,* have been omitted again. Substituting (6) and (15) into (17), yields

$$H_1 = \frac{10^{\frac{g(\alpha)}{20}}\mathrm{E}\{SS^\star\} + 10^{\frac{h}{20}}\mathrm{E}\{NN^\star\}}{\mathrm{E}\{SS^\star\} + \mathrm{E}\{NN^\star\}}$$

$$H_2 = \frac{10^{\frac{g(\alpha)}{20}}a^2\mathrm{E}\{SS^\star\} + 10^{\frac{h}{20}}\mathrm{E}\{NN^\star\}}{a^2\mathrm{E}\{SS^\star\} + \mathrm{E}\{NN^\star\}}. \tag{18}$$

The Wiener filter coefficients, for example, as given in equation (18) may be computed, for example, by the filter coefficient calculator (or scaling factor calculator) 1214a of the SAC downmix signal generator 1214. Generally speaking, the Wiener filter coefficients can be computed by the downmix processing 1314. Further, the Wiener filter coefficients may be applied to the two-channel microphone signal $x_1$, $x_2$ by the filter (or scaler) 1214b to obtain the processed two-channel audio signal or processed to channel microphone signal 1222 comprising a processed first channel signal $\hat{y}_1$ and a processed second microphone signal $\hat{y}_2$. Generally speaking, the Wiener filter coefficients may be applied by the downmix processing 1314 to derive the SAC downmix signal 1322 from the two-channel microphone signal $x_1$, $x_2$.

Fully SAC Backwards Compatible System - Generation of Spatial Side Information

In the following, it will be described how the spatial cue information 1220 is obtained by the spatial side information generator 1216 of the apparatus 1200, and how the SAC side information 1320 is obtained by the analysis unit 1312 of the apparatus 1300. It should be noted that both the spatial side information generator 1216 and the analysis unit 1312 may be configured to provide the same output information, such that the spatial cue information 1220 may be equivalent to the SAC side information 1320.

Given the stereo signal analysis results, i.e. the parameters a respectively $\alpha$ (4), $E\{SS^*\}$, and $E\{NN^*\}$, SAC decoder compatible spatial parameters 1220, 1320 are generated by the spatial side information generator 1216 or the analysis unit 1312. One way of doing this is to consider a multi-channel signal model, e.g.:

$$
\begin{aligned}
L(k,i) &= g_1(k,i)\sqrt{1+a^2}S(k,i) + h_1(k,i)\tilde{N}_1(k,i) \\
R(k,i) &= g_2(k,i)\sqrt{1+a^2}S(k,i) + h_2(k,i)\tilde{N}_2(k,i) \\
C(k,i) &= g_3(k,i)\sqrt{1+a^2}S(k,i) + h_3(k,i)\tilde{N}_3(k,i) \\
L_s(k,i) &= g_4(k,i)\sqrt{1+a^2}S(k,i) + h_4(k,i)\tilde{N}_4(k,i) \\
R_s(k,i) &= g_5(k,i)\sqrt{1+a^2}S(k,i) + h_5(k,i)\tilde{N}_5(k,i)
\end{aligned} \tag{19}
$$

where it is assumed that the power of the signals $\tilde{N}_1$ to $\tilde{N}_5$ is equal to $E\{NN^*\}$ and that $\tilde{N}_1$ to $\tilde{N}_5$ are mutually independent. If more than 5 surround audio channels are desired, a model and SAC with more channels are used.

In a first step, as a function of direction of arrival of direct sound $\alpha(k, i)$, a multi-channel amplitude panning law (V. Pulkki, "Virtual sound source positioning using Vector Base Amplitude Panning," J. Audio Eng. Soc., vol. 45, pp. 456-466, June 1997.), (D. Griesinger, "Stereo and surround panning in practice," in Preprint 112th Conv. Aud. Eng. Soc., May 2002.) is applied to determine the gain factors $g_1$ to $g_5$. This calculation may be performed by the gain factor calculator 1216a of the spatial side information generator 1216. Then, a heuristic procedure is used to determine the diffuse sound gains $h_1$ to $h_5$. The constant values $h_1 = 1:0$, $h_2 = 1:0$, $h_3 = 0$, $h_4 = 1:0$, and $h_5 = 1:0$, which may be chosen at design time, are a reasonable choice, i.e. the ambience is equally distributed to front and rear, while the center channel is generated as a dry signal.

Given the surround signal model (19), the spatial cue analysis of the specific SAC used is applied to the signal model to obtain the spatial cues. In the following, we are deriving the cues needed for MPEG Surround, which may be obtained by the spatial side information generator 1216 as an output information 1220 or which may be obtained as the SAC side information 1320 by the analysis unit 1312.

The power spectra of the signals defined in (19) are

$$\begin{aligned}
P_L(k,i) &= g_1^2(1+a^2)\mathrm{E}\{SS^\star\} + h_1^2\mathrm{E}\{NN^\star\} \\
P_R(k,i) &= g_2^2(1+a^2)\mathrm{E}\{SS^\star\} + h_2^2\mathrm{E}\{NN^\star\} \\
P_C(k,i) &= g_3^2(1+a^2)\mathrm{E}\{SS^\star\} + h_3^2\mathrm{E}\{NN^\star\} \\
P_{L_s}(k,i) &= g_4^2(1+a^2)\mathrm{E}\{SS^\star\} + h_4^2\mathrm{E}\{NN^\star\} \\
P_{R_s}(k,i) &= g_5^2(1+a^2)\mathrm{E}\{SS^\star\} + h_5^2\mathrm{E}\{NN^\star\}.
\end{aligned} \tag{20}$$

These power spectra may be computed by the channel intensity estimate calculator 1216b on the basis of the information provided by the signal analyzer 1212 and the gain factor calculator 1216, for example, taking into consideration constant values for $h_1$ to $h_5$. Alternatively, these power spectra may be calculated by the analysis unit 1312.

The cross-spectra, needed in the following are

$$\begin{aligned}
P_{LL_s}(k,i) &= g_1 g_4(1+a^2)\mathrm{E}\{SS^\star\} \\
P_{RR_s}(k,i) &= g_2 g_5(1+a^2)\mathrm{E}\{SS^\star\}.
\end{aligned} \tag{21}$$

The cross-spectra may also be computed by the channel intensity estimate calculator 1216b. Alternatively, the cross-spectra may be calculated by the analysis unit 1312.

The first two-to-one (TTO) box of MPEG Surround uses inter-channel level difference (ICLD) and inter-channel coherence (ICC) between L and Ls, which based on (19) are

$$\begin{aligned}
\mathrm{ICLD}_{LL_s} &= 10\log_{10}\frac{P_L(k,i)}{P_{L_s}(k,i)} \\
\mathrm{ICC}_{LL_s} &= \frac{P_{LL_s}(k,i)}{\sqrt{P_L(k,i)P_{L_s}(k,i)}}.
\end{aligned} \tag{22}$$

Accordingly, the spatial cue calculator 1216 may be configured to compute the spatial cues $\mathrm{ICLD}_{LLs}$ and $\mathrm{ICC}_{LLs}$ as defined in equation (22) on the basis of the channel intensity estimates and cross-spectra provided by the channel intensity estimate calculator 1216b. Alternatively, the analysis unit 1312 may compute the spatial cues as defined in equation (22).

Similarly, the ICLD and ICC of the second TTO box for R and $R_s$ are computed:

$$\begin{aligned}
\mathrm{ICLD}_{RR_s} &= 10\log_{10}\frac{P_R(k,i)}{P_{R_s}(k,i)} \\
\mathrm{ICC}_{RR_s} &= \frac{P_{RR_s}(k,i)}{\sqrt{P_R(k,i)P_{R_s}(k,i)}}.
\end{aligned} \tag{23}$$

Accordingly, the spatial cue calculator 1216c may be configured to compute the spatial cues $\mathrm{ICLD}_{RRs}$ and $\mathrm{ICC}_{RRs}$ as defined in equation (23) on the basis of the channel intensity estimates and cross-spectra provided by the channel intensity estimate calculator 1216b. Alternatively, the analysis unit 1312 may calculate the spatial cues $\mathrm{ICLD}_{RRs}$ and $\mathrm{ICC}_{RRs}$ as defined in equation (23).

The three-to-two (TTT) box of MPEG Surround is used in "energy mode". The two ICLD parameters used by the TTT box are

$$\begin{aligned}
\mathrm{ICLD}_1 &= 10\log_{10}\frac{P_L + P_{L_s} + P_R + P_{R_s}}{\frac{1}{2}P_c} \\
\mathrm{ICLD}_2 &= 10\log_{10}\frac{P_L + P_{L_s}}{P_R + P_{R_s}}.
\end{aligned} \tag{24}$$

Accordingly, the spatial cue calculator 1216c may be configured to compute the spatial cues $ICLD_1$ and $ICLD_2$ as defined in equation (24) on the basis of the channel intensity estimates provided by the channel intensity estimate calculator 1216b. Alternatively, the analysis unit 1312 may calculate the spatial cues $ICLD_1$, $ICLD_2$ as defined in equation (24).

Note that the indices *i* and *k* have been left away again for brevity of notation.

Naturally, it is not mandatory that the spatial cue calculator 1216c computes all of the above-mentioned cues $ICLD_{LLs}$, $ICLD_{RRs}$, $ICLD_1$, $ICLD_2$, $ICC_{LLs}$, $ICC_{RRs}$. Rather, it is sufficient if the spatial cue calculator 1216c (or the analysis unit 1312) computes a subset of these spatial cues, whichever are required in the actual application. Similar, it is not necessary that the channel intensity estimator 1216b (or the analysis unit 1312) computes all of the channel intensity estimates $P_L$, $P_R$, $P_C$, $P_{Ls}$, $P_{Rs}$ and cross-spectra $P_{LLs}$, $P_{RRs}$ mentioned above. Rather, it is naturally sufficient if the channel intensity estimate calculator 1216b computes those channel intensity estimates and cross-spectra, which are required for the subsequent computation of the desired spatial cues by the spatial cue calculator 1216.

### System using Microphone Signals as Downmix

The previously described scenario of using an encoder 1200, 1300, generating a SAC compatible downmix 1222, 1322 and spatial side information 1220, 1320, has the advantage that a conventional SAC decoder 1320 can be used to generate the surround audio signal.

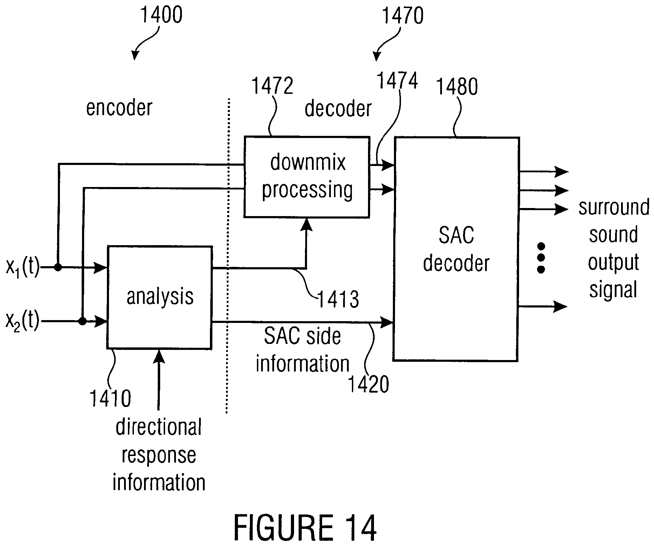

If backwards compatibility does not play a role, and if for some reason it is desired to use the unmodified microphone signals $x_1$, $x_2$ as downmix signals, the "downmix processing" can be moved from the encoder 1300 to the decoder 1370, as is illustrated in Figure 14. Note that in this scenario, the information needed for downmix processing, i.e. (18), has to be transmitted to the decoder in addition to the spatial side information (unless a heuristic algorithm is successfully designed which derives this information from the spatial side information).

In other words, Fig. 14 shows a block schematic diagram of a spatial-audio coding encoder and a spatial-audio coding decoder. The encoder 1400 comprises an analysis unit 1410, which may be identical to the analysis unit 1310, and which may therefore comprise the functionality of the signal analyzer 1212 and of the spatial side information generator 1216. In an embodiment of Fig. 14, a signal transmitted from the encoder 1400 to the extended decoder 1470 comprises the two-channel microphone signal $x_1$, $x_2$ (or an encoded representation thereof). Further, the signal transmitted from the encoder 1400 to the extended decoder 1470 also comprises information 1413, which may, for example, comprise the direct sound energy information E{SS*}, and the diffuse sound energy information E{NN*} (or an encoded version thereof). Furthermore, the information transmitted from the encoder 1400 to the extended decoder 1470 comprises a SAC side information 1420, which may be identical to the spatial cue information 1220 or to the SAC side information 1320. In the embodiment of Fig. 14, the extended decoder 1470 comprises a downmix processing 1472, which may take over the functionality of the SAC downmix signal generator 1214 or of the downmix processor 1314. The extended decoder 1470 may also comprise a conventional SAC decoder 1480, which may be identical in function to the SAC decoder 1370. The SAC decoder 1480 may therefore be configured to receive the SAC side information 1420, which is provided by the analysis unit 1410 of the encoder 1400, and a SAC downmix information 1474, which is provided by the downmix processing 1472 of the decoder on the basis of the two-channel microphone signal $x_1$, $x_2$ provided by the encoder 1400 and the additional information 1413 provided by the encoder 1400. The SAC downmix information 1474 may be equivalent to the SAC downmix information 1322. The SAC decoder 1480 may therefore be configured to provide a surround sound output signal comprising more than two audio channels on the basis of the SAC downmix signal 1474 and the SAC side information 1420.

### Blind System

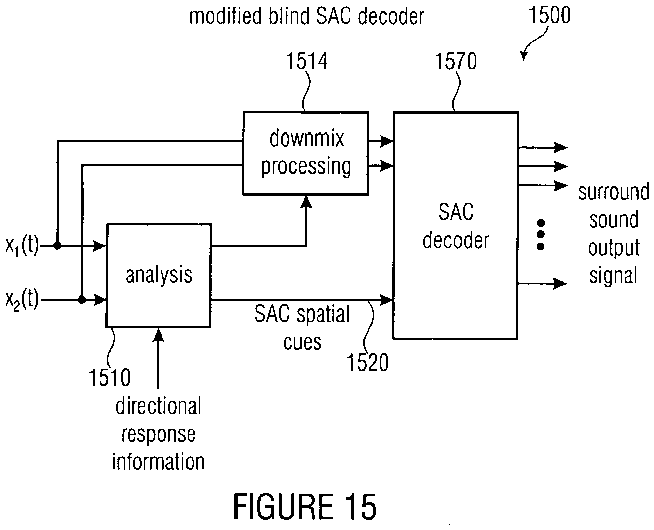

The third scenario that is described, for using SAC with stereo microphones, is a modified "Blind" SAC decoder, that can be fed directly with the microphone signals $x_1$, $x_2$ to generate surround sound signals. This corresponds to moving not only the "Downmix Processing" block 1314 but also the "Analysis" block 1312 from the encoder 1300 to the decoder 1370, as is illustrated in Figure 15. In contrast to the decoders of the first two proposed systems, the blind SAC decoder needs information on the specific microphone configuration, which is used.

A block schematic diagram of such a modified blind SAC decoder is shown in Fig. 15. As can be seen, the modified blind SAC decoder 1500 is configured to receive the microphone signals $x_1$, $x_2$ and, optionally, a directional response information characterizing the directional response of the microphone arrangement producing the microphone signals $x_1$, $x_2$. As can be seen in Fig. 15, the decoder comprises an analysis unit 1510, which is equivalent to the analysis unit 1310 and to the analysis unit 1410. In addition, the blind SAC decoder 1500 comprises a downmix processing 1514, which is identical to the downmix processing 1314, 1472. In addition, the modified blind SAC decoder 1500 comprises a SAC synthesis 1570, which may be equal to the SAC decoder 1370, 1480. Accordingly, the functionality of the blind SAC decoder 1500 is identical to the functionality of the encoder/decoder system 1300, 1370 and the encoder/decoder system 1400, 1470, with the exception that all of the above described components 1510, 1514, 1540, 1570 are arranged at the decoder side. Therefore, unprocessed microphone signals $x_1$, $x_2$ are preferably received by the blind SAC decoder 1500 rather than processed microphone signals 1322, which are received by the SAC decoder 1370. In addition, the blind SAC decoder 1500 is configured to derive the SAC side information in the form of SAC spatial cues by itself rather than receiving it from an encoder.

Regarding the SAC decoders 1370, 1480, 1570, it should be noted that this unit is responsible for providing a surround sound output signal on the basis of a downmix audio signal and the spatial cues 1320, 1420, 1520. Thus, the SAC decoder 1370, 1480, 1570 comprises an upmixer configured to synthesize the surround sound output signal (which typically comprises more than two audio channels, and preferably comprises 6 or more audio channels (for example 5 surround channels and 1 low frequency channel)) on the basis of the downmix signal (for example, the unprocessed or processed two-channel microphone signal) using the spatial cue information wherein the spatial cue information typically comprises one or more of the following parameters: Inter-channel level difference (ICLD), inter-channel correlation (ICC).

<u>Method</u>

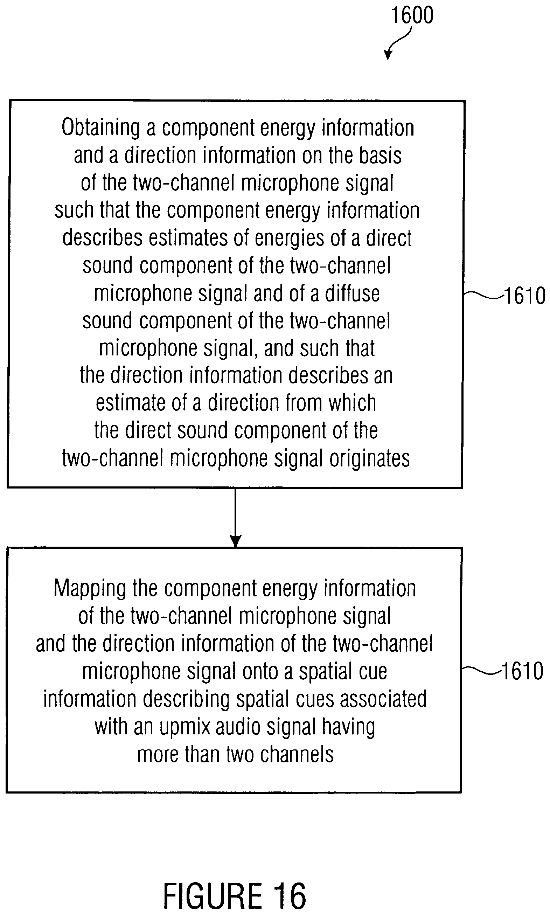

Fig. 16 shows a flow chart of a method 1600 for providing a set of spatial cues associated with an upmix audio signal having more than two channels on the basis of a two-channel microphone signal. The method 1600 comprises a first step 1610 of obtaining a component energy information and a direction information on the basis of the two-channel microphone signal, such that the component energy information describes estimates of energies of a direct sound component of the two-channel microphone signal and of a diffuse sound component of the two-channel microphone signal, and such that the direction information describes an estimate of a direction from which the direct sound component of the two-channel microphone signal originates. The method 1600 also comprises a step 1620 of mapping the component energy information of the two-channel microphone signal and the direction information of the two-channel microphone signal onto a spatial cue information describing spatial cues associated with an upmix audio signal having more than two channels. Naturally, the method 1600 can be supplemented by any of the features and functionalities of the inventive apparatus described herein.

<u>Computer Implementation</u>

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

The inventive encoded audio signal, for example, the SAC downmix signal 1322 in combination with the SAC side information 1320, or the microphone signals $x_1$, $x_2$ in combination with the information 1413, and the SAC side information 1420, or the microphone signals $x_1$, $x_2$, can be stored on a digital storage medium or can be transmitted on a transmission medium such as a wireless transmission medium or a wired transmission medium such as the Internet.

Depending on certain implementation requirements, embodiments of the invention can be implemented in hardware or in software. The implementation can be performed using a digital storage medium, for example a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above-described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

Conclusion

Suitability of stereo microphones for surround sound recording by means of using spatial audio coding (SAC) was discussed. Three systems using SAC to generate multi-channel surround audio based on stereo microphone signals were presented. One of these systems, namely the cue system according to Figs. 12 and 13, is bitstream and decoder compatible with existing SACs, where a dedicated encoder generates the compatible downmix stereo signal and side information directly from the microphone stereo signal. The second proposed system, which has been described with reference to Fig. 14, uses the microphone stereo signal directly as a SAC downmix signal and the third system, which has been described with reference to Fig. 15, is a "blind" SAC decoder converting the stereo microphone signal directly to a multi-channel surround audio signal.

Three different configurations have been described on how to use a stereo microphone with a spatial audio coder (SAC) to generate multi-channel surround audio signals. In the previous section, two examples of particularly suitable stereo microphone configurations were given.

Embodiments according to the invention create a number of two capsule-based microphone front ends for use with conventional SACs to directly capture an encode surround sound. Features of the proposed schemes are:

- The microphone configurations can be conventional stereo microphones or specifically for this purpose optimized stereo microphones.

- Without the need for generating a surround signal at the encoder, SAC compatible downmix and side information are generated.

- A high quality stereo downmix signal is generated, used by the SAC decoder to generate the surround sound.

- If coding is not desired, a modified "blind" SAC decoder can be used to directly convert the microphone signals to a surround audio signal.

In the present description, the suitability of different stereo microphone configurations for capturing surround sound information has been discussed. Based on these insights, three systems for use of SAC with stereo microphones have been proposed, and some conclusions have been presented.

The suitability of different stereo microphone configurations for capturing surround sound information has been discussed under the section entitled "Stereo Microphones and their Suitability for Surround Recording". Three systems have been described in the section entitled "Using Stereo Microphones with Spatial Audio Coders".

To further summarize, spatial audio coders, such as MPEG Surround, have enabled low bit rate and stereo backwards compatible coding of multi-channel surround audio. Directional audio coding (DirAC) can be viewed as spatial audio coding designed around specific microphone front ends. DirAC is based on B-format spatial sound analysis and has no direct stereo backward compatibility. The present invention creates a number of two capsule-based stereo compatible microphone front-ends and corresponding spatial audio coder modifications, which enable the use of spatial audio coders to directly capture and code surround sound.

**Claims**

1. An apparatus (100; 200; 300; 1200; 1300; 1400; 1500) for providing a set of spatial cues ($ICLD_{LLs}$, $ICC_{LLs}$ $ICLD_{RRs}$, $ICC_{RRs}$, $ICLD_1$, $ICLD_2$) associated with an upmix audio signal having more than two channels on the basis of a two-

channel microphone signal ($X_1(t)$, $X_2(t)$) and using a knowledge of the directional characteristic of the microphones, the apparatus comprising:

a signal analyzer (130; 1212; 1312; 1410; 1510) configured to obtain a component energy information ($E\{SS^*\}$, $E\{NN^*\}$) and a direction information (a,a) on the basis of the two-channel microphone signal ($X_1(t)$, $X_2(t)$), such that the component energy information ($E\{SS^*\}$, $E\{NN^*\}$) describes estimates of energies of a direct sound component (S) of the two-channel microphone signal and of a diffuse sound component (N) of the two-channel microphone signal, and such that the direction information (a,a) describes an estimate of a direction from which the direct sound component (S) of the two-channel microphone signal originates; and

a spatial side information generator (140; 1216; 1312; 1410; 1510) configured to map the component energy information ($E\{SS^*\}$, $E\{NN^*\}$) of the two-channel microphone signal and the direction information (a,a) of the two-channel microphone signal onto a spatial cue information describing the set of spatial cues associated with an upmix audio signal having more than two channels;

wherein the signal analyzer (130; 1212; 1312; 1410; 1510) is configured to solve a system of equations describing

(1) a relationship between an estimated energy ($E\{X_1 X_1^*\}$) of a first channel microphone signal ($X_1$) of the two-channel microphone signal, the estimated energy ($E\{SS^*\}$) of the direct sound component (S) of the two-channel microphone signal, and the estimated energy ($E\{NN^*\}$) of the diffuse sound component (N) of the two-channel microphone signal,

(2) a relationship between an estimated energy ($E\{X_2 X_2^*\}$) of a second channel microphone signal ($X_2$) of the two-channel microphone signal, the estimated energy ($E\{SS^*\}$) of the direct sound component (S) of the two-channel microphone signal, and the estimated energy ($E\{NN^*\}$) of the diffuse sound component (N) of the two-channel microphone signal, and

(3) a relationship between an estimated cross correlation value ($E\{X_1 X_2^*\}$) of the first channel microphone signal ($X_1$) and the second channel microphone signal ($X_2$), the estimated energy ($E\{SS^*\}$) of the direct sound component (S) of the two-channel microphone signal, and the estimated energy ($E\{NN^*\}$) of the diffuse sound component (N) of the two-channel microphone signal,

taking into account the assumptions that the energy ($E\{NN^*\}$) of the diffuse sound component (N) is identical in the first channel microphone signal ($X_1$) and the second channel microphone signal ($X_2$), that a ratio of energies ($E\{SS^*\}$, $a^2 E\{SS^*\}$) of the direct sound component (S) in the first microphone signal ($X_1$) and the second microphone signal ($X_2$) is direction-dependent and that a normalized cross-correlation coefficient ($\Phi$) between the diffuse sound components ($N_1, N_2$) in the first microphone signal ($X_1$) and the second microphone signal ($X_2$) takes a constant value smaller than one, which constant value is dependent on directional characteristics of microphones providing the first microphone signal ($X_1$) and the second microphone signal ($X_2$).

2. A method (1600) for providing a set of spatial cues associated with an upmix audio signal having more than two channels on the basis of a two-channel microphone signal, the method comprising:

obtaining (1610) a component energy information and a direction information on the basis of the two-channel microphone signal, such that the component energy information describes estimates of energies of a direct sound component of the two-channel microphone signal and of a diffuse sound component of the two-channel microphone signal, and such that the direction information describes an estimate of a direction from which the direct sound component of the two-channel microphone signal originates; and

mapping (1620) the component energy information of the two-channel microphone signal and the direction information of the two-channel microphone signal onto a spatial cue information describing spatial cues associated with an upmix audio signal having more than two channels;

wherein a component energy information ($E\{SS^*\}$, $E\{NN^*\}$) and a direction information (a,$\alpha$) are obtained on the basis of the two-channel microphone signal ($X_1(t)$, $X_2(t)$), such that the component energy information ($E\{SS^*\}$, $E\{NN^*\}$) describes estimates of energies of a direct sound component (S) of the two-channel microphone signal and of a diffuse sound component (N) of the two-channel microphone signal, and such that the direction information (a,$\alpha$) describes an estimate of a direction from which the direct sound component (S) of the two-channel microphone signal originates; and

wherein the component energy information ($E\{SS^*\}$, $E\{NN^*\}$) of the two-channel microphone signal and the direction information (a,$\alpha$) of the two-channel microphone signal are mapped onto a spatial cue information describing the set of spatial cues associated with an upmix audio signal having more than two channels; wherein a system of equations describing

(1) a relationship between an estimated energy ($E\{X_1X_1^*\}$) of a first channel microphone signal ($X_1$) of the two-channel microphone signal, the estimated energy ($E\{SS^*\}$) of the direct sound component (S) of the two-channel microphone signal, and the estimated energy ($E\{NN^*\}$) of the diffuse sound component (N) of the two-channel microphone signal,

(2) a relationship between an estimated energy ($E\{X_2X_2^*\}$) of a second channel microphone signal ($X_2$) of the two-channel microphone signal, the estimated energy ($E\{SS^*\}$) of the direct sound component (S) of the two-channel microphone signal, and the estimated energy ($E\{NN^*\}$) of the diffuse sound component (N) of the two-channel microphone signal, and

(3) a relationship between an estimated cross correlation value ($E\{X_1X_2^*\}$) of the first channel microphone signal ($X_1$) and the second channel microphone signal ($X_2$), the estimated energy ($E\{SS^*\}$) of the direct sound component (S) of the two-channel microphone signal, and the estimated energy ($E\{NN^*\}$) of the diffuse sound component (N) of the two-channel microphone signal,

is solved taking into account the assumptions that the energy ($E\{NN^*\}$) of the diffuse sound component (N) is identical in the first channel microphone signal ($X_1$) and the second channel microphone signal ($X_2$), that a ratio of energies ($E\{SS^*\}$, $a^2 E\{SS^*\}$) of the direct sound component (S) in the first microphone signal ($X_1$) and the second microphone signal ($X_2$) is direction-dependent and that a normalized cross-correlation coefficient ($\Phi$) between the diffuse sound components ($N_1,N_2$) in the first microphone signal ($X_1$) and the second microphone signal ($X_2$) takes a constant value smaller than one, which constant value is dependent on directional characteristics of microphones providing the first microphone signal ($X_1$) and the second microphone signal ($X_2$).

3. A computer program for performing the method according to claim 2 when the computer program runs on a computer.

**Patentansprüche**

1. Eine Vorrichtung (1.00; 200; 300; 1200; 1300; 1400; 1500) zum Bereitstellen eines Satzes von ortsbezogenen Hinweisreizen ($ICLD_{LLs}$, $ICC_{LLs}$ $ICLD_{RRs}$, $ICC_{RRs}$, $ICLD_1$, $ICLD_2$), die einem Aufwärtsmischungsaudiosignal zugeordnet sind, das mehr als zwei Kanäle aufweist, auf der Basis eines Zweikanalmikrofonsignals ($X_1(t)$, $X_2(t)$) und unter Verwendung einer Kenntnis der Richtcharakteristik der Mikrofone, wobei die Vorrichtung folgende Merkmale aufweist:

einen Signalanalysator (130; 1212; 1312; 1410; 1510), der dazu konfiguriert ist, Komponentenenergieinformationen ($E\{SS^*\}$, $E\{NN^*\}$) und Richtungsinformationen (a,a) auf der Basis des Zweikanalmikrofonsignals ($X_1(t)$, $X_2(t)$) derart zu erhalten, dass die Komponentenenergieinformationen ($E\{SS^*\}$, $E\{NN^*\}$) Schätzungen von Energien einer direkten Klangkomponente (S) des Zweikanalmikrofonsignals und einer diffusen Klangkomponente (N) des Zweikanalmikrofonsignals beschreiben, und derart, dass die Richtungsinformationen (a, a) eine Schätzung einer Richtung beschreiben, aus der die direkte Klangkomponente (S) des Zweikanalmikrofonsignals stammt; und

eine Ortsbezogene-Nebeninformation-Erzeugungseinrichtung (140; 1216; 1312; 1410; 1510), die dazu konfiguriert ist, die Komponentenenergieinformationen ($E\{SS^*\}$, $E\{NN^*\}$) des Zweikanalmikrofonsignals und die Richtungsinformationen (a, a) des Zweikanalmikrofonsignals auf Ortsbezogene-Hinweisreize-Informationen abzubilden, die den Satz von ortsbezogenen Hinweisreizen beschreiben, die einem Aufwärtsmischungsaudiosignal, das mehr als zwei Kanäle aufweist, zugeordnet sind;

wobei der Signalanalysator (130; 1212; 1312; 1410; 1510) dazu konfiguriert ist, ein Gleichungssystem zu lösen, das Folgendes beschreibt:

(1) eine Beziehung zwischen einer geschätzten Energie ($E\{X_1X_1^*\}$) eines ersten Kanalmikrofonsignals ($X_1$) des Zweikanalmikrofonsignals, der geschätzten Energie ($E\{SS^*\}$) der direkten Klangkomponente (S) des Zweikanalmikrofonsignals und der geschätzten Energie ($E\{NN^*\}$) der diffusen Klangkomponente (N) des Zweikanalmikrofonsignals,

(2) eine Beziehung zwischen einer geschätzten Energie ($E\{X_2X_2^*\}$) eines zweiten Kanalmikrofonsignals ($X_2$) des Zweikanalmikrofonsignals, der geschätzten Energie ($E\{SS^*\}$) der direkten Klangkomponente (S) des Zweikanalmikrofonsignals und der geschätzten Energie ($E\{NN^*\}$) der diffusen Klangkomponente (N) des Zweikanalmikrofonsignals, und

(3) eine Beziehung zwischen einem geschätzten Kreuzkorrelationswert ($E\{X_1X_2^*\}$) des ersten Kanalmikrofonsignals ($X_1$) und des zweiten Kanalmikrofonsignals ($X_2$), der geschätzten Energie ($E\{SS^*\}$) der direkten Klangkomponente (S) des Zweikanalmikrofonsignals und der geschätzten Energie (E{NN*}) der diffusen Klangkomponente (N) des Zweikanalmikrofonsignals,

wobei die Annahmen, dass die Energie (E{NN*}) der diffusen Klangkomponente (N) bei dem ersten Kanalmikrofonsignal ($X_1$) und dem zweiten Kanalmikrofonsignal ($X_2$) identisch ist,
dass ein Verhältnis von Energien (E{SS*}), $a^2$ E{SS*}) der direkten Klangkomponente (S) bei dem ersten Mikrofonsignal ($X_1$) und dem zweiten Mikrofonsignal ($X_2$) richtungsabhängig ist, und
dass ein normierter Kreuzkorrelationskoeffizient ($\Phi$) zwischen den diffusen Klangkomponenten ($N_1$, $N_2$) bei dem ersten Mikrofonsignal ($X_1$) und dem zweiten Mikrofonsignal ($X_2$) einen konstanten Wert aufweist, der kleiner ist als eins, wobei der konstante Wert von Richtcharakteristika von Mikrofonen abhängig ist, die das erste Mikrofonsignal ($X_1$) und das zweite Mikrofonsignal ($X_2$) bereitstellen,
berücksichtigt werden.

**2.** Ein Verfahren (1600) zum Bereitstellen eines Satzes von ortsbezogenen Hinweisreizen, die einem Aufwärtsmischungsaudiosignal zugeordnet sind, das mehr als zwei Kanäle aufweist, auf der Basis eines Zweikanalmikrofonsignals, wobei das Verfahren folgende Schritte aufweist:

Erhalten (1610) von Komponentenenergieinformationen und Richtungsinformationen auf der Basis des Zweikanalmikrofonsignals derart, dass die Komponentenenergieinformationen Schätzungen von Energien einer direkten Klangkomponente des Zweikanalmikrofonsignals und einer diffusen Klangkomponente des Zweikanalmikrofonsignals beschreiben, und derart, dass die Richtungsinformationen eine Schätzung einer Richtung beschreiben, aus der die direkte Klangkomponente des Zweikanalmikrofonsignals stammt; und
Abbilden (1620) der Komponentenenergieinformationen des Zweikanalmikrofonsignals und der Richtungsinformationen des Zweikanalmikrofonsignals auf Ortsbezogene-Hinweisreize-Informationen, die ortsbezogene Hinweisreize beschreiben, die einem Aufwärtsmischungsaudiosignal, das mehr als zwei Kanäle aufweist, zugeordnet sind;
wobei Komponentenenergieinformationen (E{SS*}, E{NN*}) und Richtungsinformationen (a,a) auf der Basis des Zweikanalmikrofonsignals ($X_1$(t), $X_2$(t)) derart erhalten werden, dass die Komponentenenergieinformationen (E{SS*}, E{NN*}) Schätzungen von Energien einer direkten Klangkomponente (S) des Zweikanalmikrofonsignals und einer diffusen Klangkomponente (N) des Zweikanalmikrofonsignals beschreiben, und derart, dass die Richtungsinformationen (a, a) eine Schätzung einer Richtung beschreiben, aus der die direkte Klangkomponente (S) des Zweikanalmikrofonsignals stammt; und
wobei die Komponentenenergieinformationen (E{SS*}, E{NN*}) des Zweikanalmikrofonsignals und die Richtungsinformationen (a, $\alpha$) des Zweikanalmikrofonsignals auf Ortsbezogene-Hinweisreize-Informationen abgebildet werden, die den Satz von ortsbezogenen Hinweisreizen beschreiben, die einem Aufwärtsmischungsaudiosignal, das mehr als zwei Kanäle aufweist, zugeordnet sind;
wobei ein Gleichungssystem, das Folgendes beschreibt:

(1) eine Beziehung zwischen einer geschätzten Energie (E{$X_1 X_1$*}) eines ersten Kanalmikrofonsignals ($X_1$) des Zweikanalmikrofonsignals, der geschätzten Energie (E{SS*}) der direkten Klangkomponente (S) des Zweikanalmikrofonsignals und der geschätzten Energie (E{NN*}) der diffusen Klangkomponente (N) des Zweikanalmikrofonsignals,
(2) eine Beziehung zwischen einer geschätzten Energie (E{$X_2 X_2$*}) eines zweiten Kanalmikrofonsignals ($X_2$) des Zweikanalmikrofonsignals, der geschätzten Energie (E{SS*}) der direkten Klangkomponente (S) des Zweikanalmikrofonsignals und der geschätzten Energie (E{NN*}) der diffusen Klangkomponente (N) des Zweikanalmikrofonsignals, und
(3) eine Beziehung zwischen einem geschätzten Kreuzkorrelationswert (E{$X_1 X_2$*}) des ersten Kanalmikrofonsignals ($X_1$) und des zweiten Kanalmikrofonsignals ($X_2$), der geschätzten Energie (E{SS*}) der direkten Klangkomponente (S) des Zweikanalmikrofonsignals und der geschätzten Energie (E{NN*}) der diffusen Klangkomponente (N) des Zweikanalmikrofonsignals,

unter Berücksichtigung der Annahmen, dass die Energie (E{NN*}) der diffusen Klangkomponente (N) bei dem ersten Kanalmikrofonsignal ($X_1$) und dem zweiten Kanalmikrofonsignal ($X_2$) identisch ist,
dass ein Verhältnis von Energien (E{SS*}), $a^2$ E{SS*}) der direkten Klangkomponente (S) bei dem ersten Mikrofonsignal ($X_1$) und dem zweiten Mikrofonsignal ($X_2$) richtungsabhängig ist, und
dass ein normierter Kreuzkorrelationskoeffizient ($\Phi$) zwischen den diffusen Klangkomponenten ($N_1$, $N_2$) bei dem ersten Mikrofonsignal ($X_1$) und dem zweiten Mikrofonsignal ($X_2$) einen konstanten Wert aufweist, der kleiner ist als eins, wobei der konstante Wert von Richtcharakteristika von Mikrofonen abhängig ist, die das erste

Mikrofonsignal ($X_1$) und das zweite Mikrofonsignal ($X_2$) bereitstellen,
gelöst wird.

3.  Ein Computerprogramm zum Durchführen des Verfahrens gemäß Anspruch 2, wenn das Computerprogramm auf einem Computer abläuft.

**Revendications**

1.  Appareil (100; 200; 300; 1200; 1300; 1400; 1500) pour fournir un ensemble de repères spatiaux ($ICLD_{LLs}$, $ICC_{LLs}$ $ICLD_{RRs}$, $ICCRR_s$, $ICLD_1$, $ICLD_2$) associés à un signal audio de mélange vers le haut présentant plus de deux canaux sur base d'un signal de microphone bicanal ($X_1(t)$, $X_2(t)$) et à l'aide d'une connaissance de la caractéristique directionnelle des microphones, l'appareil comprenant:

    un analyseur de signal (130; 1212; 1312; 1410; 1510) configuré pour obtenir une information d'énergie de composante ($E\{SS^*\}$, $E\{NN^*\}$) et une information de direction (a, a) sur base du signal de microphone bicanal ($X_1(t)$, $X_2(t)$), de sorte que l'information d'énergie de composante ($E\{SS^*\}$, $E\{NN^*\}$) décrive des estimations d'énergie d'une composante de son directe (S) du signal de microphone bicanal et d'une composante de son diffuse (N) du signal de microphone bicanal, et de sorte que l'information de direction (a, $\alpha$) décrive une estimation d'une direction de laquelle provient la composante de son directe (S) du signal de microphone bicanal; et
    un générateur d'informations latérales spatiales (140; 1216; 1312; 1410; 1510) configuré pour mapper l'information d'énergie de composante ($E\{SS^*\}$, $E\{NN^*\}$) du signal de microphone bicanal et l'information de direction (a, $\alpha$) du signal de microphone bicanal sur une information de repères spatiaux décrivant l'ensemble des repères spatiaux associés à un signal audio de mélange vers le haut présentant plus de deux canaux;
    dans lequel l'analyseur de signal (130; 1212; 1312; 1410; 1510) est configuré pour résoudre un système d'équations décrivant

    (1) un rapport entre une énergie estimée ($E\{X_1X_1^*\}$) d'un premier signal de microphone à canaux ($X_1$) du signal de microphone bicanal, l'énergie estimée ($E\{SS^*\}$) de la composante de son directe (S) du signal de microphone bicanal et l'énergie estimée ($E\{NN^*\}$) de la composante de son diffuse (N) du signal de microphone bicanal,
    (2) un rapport entre une énergie estimée ($E\{X_2X_2^*\}$) d'un deuxième signal de microphone à canaux ($X_2$) du signal de microphone bicanal, l'énergie estimée ($E\{SS^*\}$) de la composante de son directe (S) du signal de microphone bicanal et l'énergie estimée ($E\{NN^*\}$) de la composante de son diffuse (N) du signal de microphone bicanal, et
    (3) un rapport entre une valeur de corrélation croisée estimée ($E\{X_1X_2^*\}$) du premier signal de microphone à canaux ($X_1$) et le deuxième signal de microphone à canaux ($X_2$), l'énergie estimée ($E\{SS^*\}$) de la composante de son directe (S) du signal de microphone bicanal et l'énergie estimée ($E\{NN^*\}$) de la composante de son diffuse (N) du signal de microphone bicanal,

    compte tenu des suppositions que l'énergie ($E\{NN^*\}$) de la composante de son diffuse (N) est identique dans le premier signal de microphone à canaux ($X_1$) et le deuxième signal de microphone à canaux ($X_2$),
    qu'un rapport entre les énergies ($E\{SS^*\}$, $a^2 E\{SS^*\}$) de la composante de son directe (S) dans le premier signal de microphone ($X_1$) et le deuxième signal de microphone ($X_2$) dépend de la direction, et
    qu'un coefficient de corrélation croisée normalisé ($\Phi$) entre les composantes de son diffuses ($N_1$, $N_2$) dans le premier signal de microphone ($X_1$) et le deuxième signal de microphone ($X_2$) adopte une valeur constante inférieure à un, valeur constante qui dépend des caractéristiques directionnelles des microphones fournissant le premier signal de microphone ($X_1$) et le deuxième signal de microphone ($X_2$).

2.  Procédé (1600) pour fournir un ensemble de signaux spatiaux associés à un signal audio de mélange vers le haut présentant plus de deux canaux sur base d'un signal de microphone bicanal, le procédé comprenant le fait de:

    obtenir (1610) une information d'énergie de composante et une information de direction sur base du signal de microphone bicanal, de sorte que les informations d'énergie de composante décrivent des estimations d'énergie d'une composante de son directe du signal de microphone bicanal et d'une composante de son diffuse du signal de microphone bicanal, et de sorte que les informations de direction décrivent une estimation d'une direction de laquelle provient la composante de son directe du signal de microphone bicanal; et
    mapper (1620) les informations d'énergie de composante du signal de microphone bicanal et les informations de direction du signal de microphone bicanal sur une information de repères spatiaux décrivant les repères spatiaux associés à un signal audio de mélange vers le haut présentant plus de deux canaux;

dans lequel une information d'énergie de composante (E{SS*}, E{NN*}) et une information de direction (a, $\alpha$) sont obtenues sur base du signal de microphone bicanal ($X_1(t)$, $X_2(t)$), de sorte que l'information d'énergie de composante (E{SS*}, E{NN*}) décrive les estimations des énergies d'une composante de son directe (S) du signal de microphone bicanal et d'une composante de son diffuse (N) du signal de microphone bicanal, et de sorte que l'information de direction (a, $\alpha$) décrive une estimation d'une direction de laquelle provient la composante de son directe (S) du signal de microphone bicanal; et

dans lequel l'information d'énergie de composante (E{SS*}, E{NN*}) du signal de microphone bicanal et l'information de direction (a, $\alpha$) du signal de microphone bicanal sont mappés sur une information de repères spatiaux décrivant l'ensemble de repères spatiaux associés à un signal audio de mélange vers le haut présentant plus de deux canaux;

dans lequel un système d'équations décrivant

(1) un rapport entre une énergie estimée (E{$X_1X_1$*}) d'un premier signal de microphone à canaux ($X_1$) du signal de microphone bicanal, l'énergie estimée (E{SS*}) de la composante de son directe (S) du signal de microphone bicanal et l'énergie estimée (E{NN*}) de la composante de son diffuse (N) du signal de microphone bicanal,

(2) un rapport entre une énergie estimée (E{$X_2X_2$*}) d'un deuxième signal de microphone à canaux ($X_2$) du signal de microphone bicanal, l'énergie estimée (E{SS*}) de la composante de son directe (S) du signal de microphone bicanal et l'énergie estimée (E{NN*}) de la composante de son diffuse (N) du signal de microphone bicanal, et

(3) un rapport entre une valeur de corrélation croisée estimée (E{$X_1X_2$*}) du premier signal de microphone à canaux ($X_1$) et le deuxième signal de microphone à canaux ($X_2$), l'énergie estimée (E{SS*}) de la composante de son directe (S) du signal de microphone bicanal et l'énergie estimée (E{NN*}) de la composante de son diffuse (N) du signal de microphone bicanal,

est résolu en tenant compte des suppositions que l'énergie (E {NN*}) de la composante de son diffuse (N) est identique dans le premier signal de microphone à canaux ($X_1$) et le deuxième signal de microphone à canaux ($X_2$), qu'un rapport entre les énergies (E{SS*}, $a^2$ E{SS*}) de la composante de son directe (S) dans le premier signal de microphone ($X_1$) et le deuxième signal de microphone ($X_2$) dépend de la direction, et.

qu'un coefficient de corrélation croisée normalisé ($\Phi$) entre les composantes de son diffuses ($N_1$, $N_2$) dans le premier signal de microphone ($X_1$) et le deuxième signal de microphone ($X_2$) adopte une valeur constante inférieure à un, valeur constante qui dépend des caractéristiques directionnelles des microphones fournissant le premier signal de microphone ($X_1$) et le deuxième signal de microphone ($X_2$).

3. Programme d'ordinateur pour réaliser le procédé selon la revendication 2 lorsque le programme d'ordinateur est exécuté sur un ordinateur.

spatial cue information

120

spatial side information generator

140

component energy information

132

direction information

134

100

signal analyzer

130

110

$x_1(t)$

112

$x_2(t)$

FIGURE 1

22

**FIGURE 2**

EP 2 347 410 B1

FIGURE 3

FIGURE 4

FIGURE 5A

FIGURE 5B

FIGURE 6

FIGURE 7A

FIGURE 7B

FIGURE 8

FIGURE 9A

FIGURE 9B

FIGURE 10A

FIGURE 10B

FIGURE 11A

FIGURE 11B

FIGURE 12

1300

encoder     1322     decoder

downmix
processing
(optional)

SAC downmix

1319

analysis

SAC
decoder

surround
sound
output
signal

$x_1(t)$

$x_2(t)$

1312

SAC side
information

1320

1310

1370

directional
response
information

FIGURE 13

1400

1470

1472   decoder   1474   1480

encoder

downmix
processing

SAC
decoder

$x_1(t)$

analysis

$x_2(t)$

SAC side
information

1410

1413

1420

directional
response
information

surround
sound
output
signal

FIGURE 14

modified blind SAC decoder

1500

1514

1570

downmix processing

SAC decoder

surround sound output signal

$x_1(t)$

analysis

SAC spatial cues

1520

1510

directional response information

FIGURE 15

1600

Obtaining a component energy information
and a direction information on the basis
of the two-channel microphone signal
such that the component energy information
describes estimates of energies of a direct
sound component of the two-channel
microphone signal and of a diffuse
sound component of the two-channel
microphone signal, and such that
the direction information describes an
estimate of a direction from which
the direct sound component of the
two-channel microphone signal originates

1610

Mapping the component energy information
of the two-channel microphone signal
and the direction information of the two-channel
microphone signal onto a spatial cue
information describing spatial cues associated
with an upmix audio signal having
more than two channels

1610

FIGURE 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R. WAAL ; R. VELDHUIS.** Subband coding of stereophonic digital audio signals. *Proc. IEEE ICASSP,* 1991, 3601-3604
- **J. HERRE ; K. BRANDENBURG ; D. LEDERER.** Intensity stereo coding. *96th AES Conv.,* February 1994
- **C. FALLER ; F. BAUMGARTE.** Efficient representation of spatial audio using perceptual parametrization. *Proc. IEEE Workshop on Appl. Of Sig. Proc. to Audio and Acoust.,* October 2001, 199-202
- Binaural Cue Coding - Part II: Schemes and applications. *IEEE Trans. on Speech and Audio Proc.,* November 2003, vol. 11 (6), 520-531
- **F. BAUMGARTE ; C. FALLER.** Why Binaural Cue Coding is better than Intensity Stereo Coding. *Preprint 112th Conv. Aud. Eng. Soc.,* May 2002
- **E. SCHUIJERS ; J. BREEBAART ; H. PURNHAGEN ; J. ENGDEGARD.** Low complexity parametric stereo coding. *Preprint 117th Conv. Aud. Eng. Soc.,* May 2004
- **J. HERRE ; C. FALLER ; C. ERTEL ; J. HILPERT ; A. HOELZER ; C. SPENGER.** MP3 Surround: Efficient and compatible coding of multi-channel audio. *Preprint 116th Conv. Aud. Eng. Soc.,* May 2004
- **C. FALLER.** Coding of spatial audio compatible with different playback formats. *Preprint 117th Conv. Aud. Eng. Soc.,* October 2004
- **J. HERRE ; K. KJÖRLING ; J. BREEBAART ; C. FALLER ; S. DISCH ; H. PURNHAGEN ; J. KOPPENS ; J. HILPERT ; J. RÖDÉN ; W. OOMEN.** Mpeg surround - the iso/mpeg standard for efficient and compatible multi-channel audio coding. *Preprint 122th Conv. Aud. Eng. Soc.,* May 2007
- **J. MERIMAA ; V. PULKKI.** Spatial impulse response rendering i: Analysis and synthesis. *J. Aud. Eng. Soc.,* 2005, vol. 53 (12
- **V. PULKKI ; J. MERIMAA.** Spatial impulse response rendering ii: Reproduction of diffuse sound and listening tests. *J. Aud. Eng. Soc.,* 2006, vol. 54 (1
- **M. A. GERZON.** Periphony: Width-Height Sound Reproduction. *J. Aud. Eng. Soc.,* 1973, vol. 21 (1), 2-10

- **K. FARRAR.** Soundfield microphone. *Wireless World,* October 1979, 48-50
- **V. PULKKI ; C. FALLER.** Directional audio coding: Filterbank and STFTbased design. *Preprint 120th Conv. Aud. Eng. Soc.,* May 2006
- **J. AHONEN ; G. D. GALDO ; M. KALLINGER ; F. KÜCH ; V. PULKKI ; R. SCHULTZ-AMLING.** Analysis and adjustment of planar microphone arrays for application in directional audio coding. *Preprint 124th Conv. Aud. Eng. Soc.,* May 2008
- **J. AHONEN ; M. KALLINGER ; F. KÜCH ; V. PULKKI ; R. SCHULTZ-AMLING.** Directional analysis of sound field with linear microphone array and applications in sound reproduction. *Preprint 124th Conv. Aud. Eng. Soc.,* May 2008
- **J. BLAUERT ; SPATIAL HEARING.** The Psychophysics of Human Sound Localization. The MIT Press, 1997
- **J. M. EARGLE.** Multichannel stereo matrix systems: An overview. *IEEE Trans. on Speech and Audio Proc.,* July 1971, vol. 19 (7), 552-559
- **K. GUNDRY.** A new active matrix decoder for surround sound. *Proc. AES 19th Int. Conf,* June 2001
- **C. FALLER.** Matrix surround revisited. *Proc. 30th Int. Conv. Aud. Eng. Soc.,* March 2007
- Multi-loudspeaker playback of stereo signals. *J. of the Aud. Eng. Soc.,* November 2006, vol. 54 (11), 1051-1064
- A highly directive 2-capsule based microphone system. *Preprint 123rd Conv. Aud. Eng. Soc.,* October 2007
- **S. HAYKIN.** Adaptive Filter Theory. Prentice Hall, 1996
- **V. PULKKI.** Virtual sound source positioning using Vector Base Amplitude Panning. *J. Audio Eng. Soc.,* June 1997, vol. 45, 456-466
- **D. GRIESINGER.** Stereo and surround panning in practice. *Preprint 112th Conv. Aud. Eng. Soc.,* May 2002